## Europäisches Patentamt

## European Patent Office

## Office européen des brevets

(19)

(11) Veröffentlichungsnummer: **0 161 630**
**B1**

(12) **EUROPÄISCHE PATENTSCHRIFT**

(45) Veröffentlichungstag der Patentschrift:
**14.09.88**

(51) Int. Cl.⁴: **B 64 D 17/32, A 44 B 11/25**

(21) Anmeldenummer: **85105613.5**

(22) Anmeldetag: **08.05.85**

---

(54) **Zentralgurtschloss für Anschnallgurte.**

---

(30) Priorität: **12.05.84 DE 3417752**
**23.02.85 DE 3506391**

(43) Veröffentlichungstag der Anmeldung:
**21.11.85 Patentblatt 85/47**

(45) Bekanntmachung des Hinweises auf die Patenterteilung:
**14.09.88 Patentblatt 88/37**

(84) Benannte Vertragsstaaten:
**FR GB IT**

(56) Entgegenhaltungen:
**DE - A - 1 002 632**
**GB - A - 339 388**
**GB - A - 905 792**
**GB - A - 1 371 152**

(73) Patentinhaber: **AUTOFLUG GMBH,**
**Industriestrasse 10 Postfach 1180, D-2084 Rellingen (DE)**

(72) Erfinder: **Nöhren, Hubert, Dipl.-Ing., Astweg 51, D-2000 Hamburg 54 (DE)**

(74) Vertreter: **Müller, Karl-Ernst, Dr. et al, Patentanwälte Becker, Müller & Pust Eisenhüttenstrasse 2, D-4030 Ratingen 1 (DE)**

ACTORUM AG

## Beschreibung

Die Erfindung betrifft ein Zentralgurtschloss für Anschnallgurte, insbesondere von Fliegern oder Fallschirmspringern, zum schnell und gleichzeitig lösbaren Verbinden mehrerer mit Anschlussstücken versehener, an einem zentralen Punkt zusammenlaufender Gurte, welches Einrichtungen zum gesicherten Festhalten sowie zum Freigeben der Anschlussstücke enthält, wobei diese Einrichtungen mit einer manuell zu bedienenden Drehbetätigungsvorrichtung, vorzugsweise einer Drehscheibe oder einem Drehkreuz, wirkungsmässig gekoppelt sind, die oberhalb eines mittigen Zapfens angeordnet ist, an dem die Bewegungsvorgänge im Schloss orientiert sind.

Ein derartiges Gurtschloss ist durch die GB-A 339 388 bekannt.

Zentralgurtschlösser mit diesen Merkmalen sind ausserdem durch die DE-OS 3 047 664, durch die am 4. Oktober 1956 bekanntgemachten Unterlagen der deutschen Patentanmeldung A 22 898 XI/62c und die DE-AS 1 002 632 bekannt. Diese bekannten Schlösser weisen zur Erfüllung ihrer Zeckbestimmung und in Verbindung damit zu ihrer richtigen Handhabung drei Schaltstellungen ihrer Betätigungsvorrichtungen auf, nämlich die Schaltstellungen «ANLEGEN», «GESICHERT» und «ABLEGEN». Dabei sind diese drei Schaltstellungen jeweils sämtlich durch Bedienung ein und derselben manuellen Betätigungsvorrichtung erzielbar, d.h. zum «ANLEGEN» muss die betreffende Person die gleiche Vorrichtung handhaben, die auch zum Einstellen von «GESICHERT» und «ABLEGEN» dient. Deshalb sind Fehler bei der Bedienung solcher Zentralgurtschlösser nicht völlig auszuschliessen, beispielsweise kann durch hastiges Handhaben bei einem eiligen Einsatz ein lebensgefährlicher Fehler unterlaufen, indem nach dem Anlegen die Betätigung in die Stellung «GESICHERT» vergessen wird. Die Erfindung beschäftigt sich deshalb mit dem Problem, das Erreichen der notwendigen Schaltstellung «GESICHERT» bei Zentralgurtschlössern für Anschnallgurte, insbesondere von Fliegern oder Fallschirmspringern, nach dem Anlegevorgang mit Sicherheit zu gewährleisten.

Die am weitesten verbreitete Art und Weise der Betätigung von Zentralgurtschlössern ist die Handhabung der Funktionen mittels Drehen an einer Drehscheibe und Drücken der Scheibe in Körperrichtung der Person. Derartige Schlösser zeigen die erwähnten Unterlagen der Patentanmeldung A 22 898 XI/62c und die DE-AS 1 002 632. Dabei handelt es sich um Zentralgurtschlösser mit vier federbelasteten, durch ein Führungskreuz gehaltenen Ankerbolzen und Sicherungsscheibe. Die Schlösser haben einen Hauptzapfen, der senkrecht zur Grundplatte des Schlossgehäuses verschieblich ist und das Führungskreuz sowie die Sicherungsscheibe beaufschlagt. An der Oberseite des Hauptzapfens ist eine kreisrunde Drehscheibe befestigt, die sowohl in beiden Richtungen gedreht als auch mit dem Hauptzapfen in das Gehäuse hineingedrückt werden kann. Hierdurch werden die verschiedenen Schlossfunktionen gehandhabt.

Die vorgenannten Zentralgurtschlösser sind aber nur für eine bestimmte Anzahl von Gurten mit entsprechenden Anschlussstücken vorgesehen, und diese können auch nur an einer bestimmten Stelle am Schloss angreifen. Demgegenüber haben die sog. Glockenschlösser gemäss der eingangs erwähnten DE-OS 3 047 664 und der DE-AS 1 275 875 den Vorteil, dass sie mehr Anschlussstücke aufnehmen und dass diese sich in die genaue Zugrichtung selbsttätig einstellen können. Gemäss einem parallelen Vorschlag sind auch die Zentralgurtschlösser des Glockentyps, also mit umlaufendem Randwulst zum stellungsbeliebigen Einpicken von hakenförmigen Anschlussstücken und einem hierzu taumelnd gelagerten Gehäuseteil, mit einer Drehbetätigung ausgestattet, d.h. diese Schlösser weisen ebenfalls eine Drehscheibe oder ein Drehkreuz als Handhabe auf.

Der Erfindung liegt die Aufgabe zugrunde, ein Zentralgurtschloss der eingangs genannten Gattung, also mit Drehbetätigungsvorrichtung, zu schaffen, bei der zum Anlegen der Gurte, d.h. zum Einschieben bzw. Einhaken der Anschlussstücke in das Schlossgehäuse eine Drehbetätigung nicht erforderlich ist, so dass die Drehbetätigungsvorrichtung also nur zwei Schaltstellungen aufzuweisen braucht, nämlich «GESICHERT» und «ABLEGEN». Beim Anlegen der Gurte sollen diese Schaltstellungen gar nicht tangiert werden, vielmehr soll zum Anlegen eine davon unabhängige Handhabung vorgesehen sein, welche zugleich verhaltensgerecht, baulich einfach und sicher ist.

Die erfindungsgemässe Lösung dieser Aufgabe ergibt sich aus Anspruch 1. Vorteilhafte Ausgestaltungen und Weiterbildungen derselben ergeben sich aus dem Inhalt der abhängigen Patentansprüche.

Mit der Erfindung ist der Vorteil verbunden, dass der Träger des Gurtzeuges, z.B. ein Pilot oder Fallschirmspringer, beim Anlegen des Gurtzeuges die zum Entsichern und Lösen der Gurte vom Schloss vorgesehene Betätigungsvorrichtung praktisch überhaupt nicht zu berühren braucht, so dass auch keine diesbezüglichen Fehler unterlaufen können. Für das Anlegen des Gurtzeuges, also für das Einschieben der Anschlussstücke in das Schloss, so dass die Anschlussstücke darin festgehalten werden, ist vielmehr eine getrennte Betätigungsvorrichtung vorhanden, die das Anlegen nicht nur vereinfacht und damit erleichtert, sondern auch der Person die beruhigende Gewissheit vermittelt, dass ihre Sicherheit nicht beeinträchtigt worden sein kann. Aufgrund der Erfindung braucht die Person das Einhalten einer bestimmten Schaltstellung des Schlosses nicht mehr durch notwendiges Hinsehen zu kontrollieren, vielmehr genügt praktisch ein Fingerdruck, um das Anlegen eines Gurtes jeweils zu ermöglichen, ohne dass dadurch ein Risiko bezüglich der Sicherheit entstehen könnte.

Insofern erweist sich der Erfindungsgegenstand als besonders verhaltensgerecht.

Zwar sind mit einem Finger zu betätigende Druck- und Schiebetasten bei Gurtschlössern, insbesondere für Sicherheitsgurte in Kraftfahrzeugen, aber auch beispielsweise bei seewasseraktivierten Zentralgurtschlössern, für die Gurtzeuge von Fallschirmspringern, bekannt, aber die Fingertasten dienen dabei einem anderen als dem erfindungsgemässen Zweck, vorzugsweise dem Trennen der Gurte vom Schloss, d.h. dem Ablegen des betreffenden Gurtzeuges. Hierzu ist die erfindungsgemässe Lösung gerade nicht geschaffen.

Mit den Schlössern gemäss dem Stand der Technik ist weiterhin der Nachteil verbunden, dass eine gesonderte und gezielte Auslösung einzelner Gurtanschlussstücke, vorzugsweise der Schultergurtanschlussstücke, nicht möglich ist, weil bei Einstellen der Schlossfunktion «ABLEGEN» bei den bekannten Schlössern immer jeweils alle Gurtanschlussstücke vom Schloss freigegeben werden bzw. eine Zwei-Hand-Bedienung, nämlich das Lösen der Verriegelung und das Herausnehmen der jeweiligen Gurtanschlussstücke, erforderlich ist.

Es ist daher eine weitere Aufgabe der Erfindung, die mit der Erfindung schon umgestalteten Schlösser weiter derart zu verbessern, dass eine gezielte Auslösung einzelner Gurtanschlussstücke, vorzugsweise der beiden Schultergurtlaschen, mit Einhandbedienung zügig möglich ist, ohne die Schlossverbindung mit den anderen Laschen aufzuheben.

Die Lösung dieser Aufgabe, welche allerdings nur auf Zentralgurtschlösser des Glockentyps anwendbar ist, macht sich die Weiterbildung derartiger Schlösser mit den Merkmalen der Ansprüche 2 bis 13 zunutze, indem an der Drehscheibe über den für die Einzelauslösung vorgesehenen Anschlussstücken eine Griffmulde ausgebildet ist. Nach Drücken der die Schlossverriegelung aufhebenden Drucktaste gestattet die Griffmulde ein gezieltes Kippen der Haltescheibe mit Freigabe der betreffenden Gurtanschlussstücke. Somit ist mit der Erfindung der besondere Vorteil verbunden, dass eine Einhandbedienung des Schlosses möglich ist.

In der Zeichnung sind zwei Ausführungsbeispiele in teilweise vereinfachter Darstellung wiedergegeben, welche nachstehend beschrieben werden. Es zeigen:

Fig. 1 ein als sogenanntes Glockenschloss ausgebildetes Zentralgurtschloss in Seitenansicht,

Fig. 2 eine Draufsicht auf das Schloss gemäss Fig. 1 mit Drehscheibe,

Fig. 3 eine Draufsicht auf das Schloss gemäss Fig. 1 bei entfernter Drehscheibe und geschnittenem Druckstift,

Fig. 4 eine Ansicht auf einen diametralen Querschnitt durch das Schloss entsprechend der Linie IV-IV in Fig. 2, mit einem weiteren Anschlussstück,

Fig. 5 eine schaubildliche Darstellung des Hauptzapfens,

Fig. 6 eine Ansicht auf einen Längsmittenschnitt durch den Hauptzapfen mit Drucktaste entsprechend einem Ausschnitt der Fig. 4,

Fig. 7 eine Draufsicht auf die kippbewegliche Haltescheibe bei entfernter Kurvenscheibe und Drehscheibe,

Fig. 8 eine Ansicht auf einen Schnitt nach der Linie VIII-VIII in Fig. 7 in vergrössertem Massstab,

Fig. 9 eine schematische Darstellung der abgewickelten Kurve der Kurvenscheibe entsprechend der Linie IX-IX in Fig. 3 mit Funktionsangaben,

Fig. 10 ein zweites Ausführungsbeispiel, und zwar eine Ansicht auf einen diametralen Querschnitt durch ein Zentralgurtschloss mit Ankerbolzen entsprechend der Linie X-X in Fig. 11 und 12,

Fig. 11 eine Draufsicht auf das Schloss gemäss Fig. 10 mit teilweise freigelegter Schiebetaste,

Fig. 12 eine Ansicht entsprechend Fig. 11, jedoch mit teilweise freigelegtem Führungskreuz für die Ankerbolzen und Sicherungsglied dafür,

Fig. 13 eine Seitenansicht (A, Fig. 14) eines sogenannten Glockenschlosses in einer anderen Ausführungsform,

Fig. 14 das Glockenschloss gemäss Fig. 13 in Draufsicht.

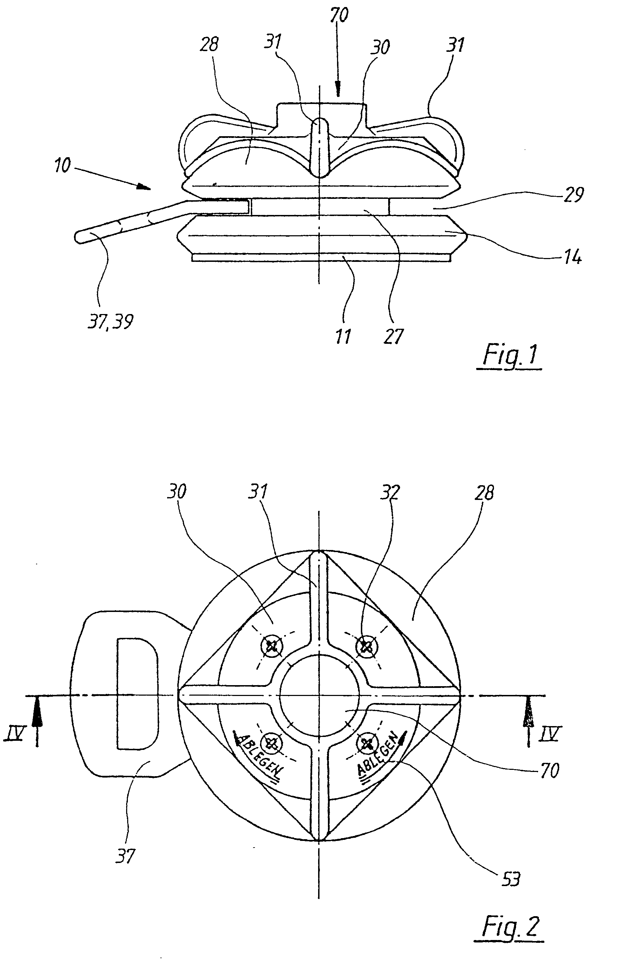

Zunächst wird das in den Figuren 1–9 dargestellte Glockenschloss 10 beschrieben. Hierbei ist an einer kreisscheibenförmigen Grundplatte 11 mittels Schrauben 12 ein napfartiges, in der Mitte durchbrochenes Gehäuse 13 befestigt, welches aussen einen im Querschnitt hakenförmigen Randwulst 14 trägt, so dass das Gehäuse 13 nach oben hin offen ist. Das Gehäuse 13 wird auch Glocke genannt, und deshalb heisst dieser Schlosstyp in Fachkreisen Glockenschloss.

In dem Mittendurchbruch des Gehäuses 13 ist über eine Kopfplatte 15 ein Gewindebolzen 16 befestigt, auf den mittels einer zugeordneten Gewindebohrung 17 der Hauptzapfen 18 des Zentralgurtschlosses aufgeschraubt ist. Dieser hat in seinem unteren Bereich eine ballige Verjüngung 19, die nach oben hin absatzlos in den zylindrischen Teil 20 des Hauptzapfens 18 übergeht. Dieser zylindrische Teil weist oben einen ringförmigen Überstand 21 und darunter eine ringförmige Stufe 22 auf, an der das eine Ende einer Kegelstumpffeder 23 abgestützt ist. Das andere Ende der Feder 23 lagert auf der Innenseite eines zur Mitte des Gehäuses 13 hin vorspringenden Radialflansches 24, welcher eine den Hauptzapfen 18 umgebende Öffnung 25 umschliesst, deren Durchmesser im wesentlichen dem Durchmesser des zylindrischen Zapfenteils 20 entspricht.

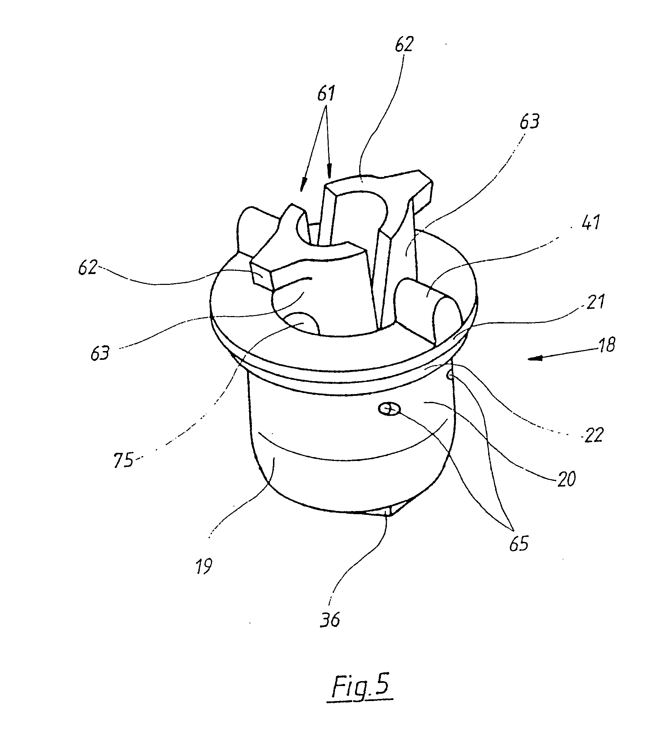

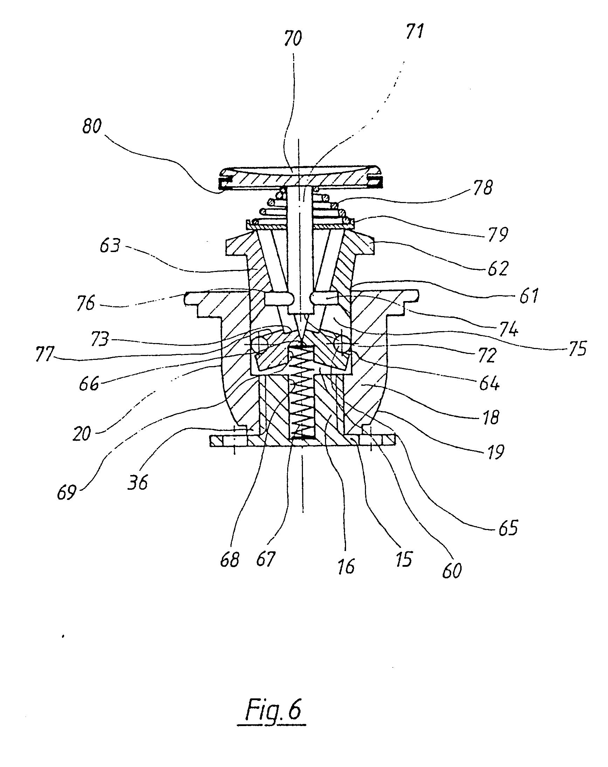

Der mit dem Gehäuse 13 fest verschraubte und somit gehäusefeste Hauptzapfen 18 ist in den Figuren 5 und 6 der Zeichnung schaubildlich und in Schnittansicht dargestellt; seine Einzelheiten werden weiter unten beschrieben.

Der die Kegelstumpffeder 23 unten abstützende Radialflansch 24 setzt sich zum Randwulst 14 hin bis nahe an dessen Innenkante fort und bildet einen äusseren Flanschteil 26, der zusammen mit dem inneren Flanschteil 24 den unteren Abschluss einer den Hauptzapfen 18 umgebenden Nabe 27 bildet. Diese Nabe 27 sitzt wie ein rohrförmiger Ansatz konzentrisch an der Unterseite einer in mehrfacher Hinsicht beweglichen, ringförmigen Haltescheibe 28, die sich bis über den hakenförmigen Randwulst 14 hinaus erstreckt und damit den zwischen dem Randwulst 14 und der Nabe 27 gebildeten ringförmigen Hohlraum von oben her abdeckt. Die Haltescheibe 28 ist zusammen mit der Nabe 27 und dem Radialflansch 24, 26 einstückig ausgebildet, so dass dieses Bauteil als ganzes über die Feder 23 an der Stufe 22 des Hauptzapfens 18 von unten her nachgiebig gelagert ist. Diese Nachgiebigkeit wirkt sich derart aus, dass die Haltescheibe 28 nicht nur gegen Federdruck in Längsachsenrichtung des Hauptzapfens 18 verschieblich ist, sondern auch entsprechend der typischen Funktionsweise von Glockenschlössern auf dem Hauptzapfen kippen bzw. taumeln kann.

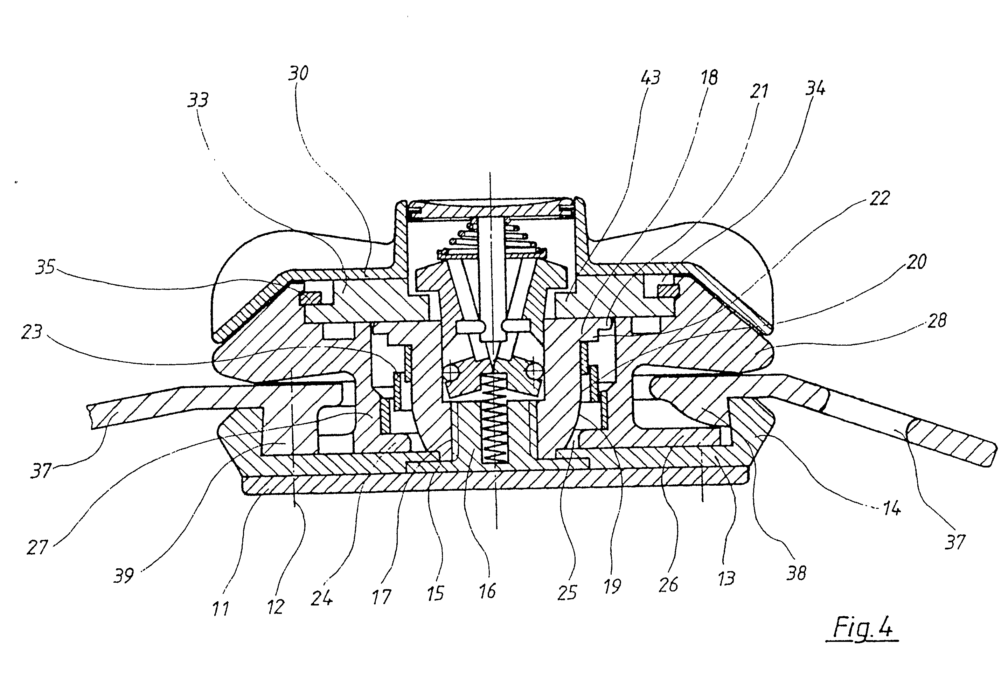

Die Betätigung der kippbeweglichen Haltescheibe 28 muss nach Vorschrift wenigstens drei Positionen oder Schaltstellungen hervorrufen können, nämlich die Position «GESICHERT», in der das Zentralgurtschloss verschlossen und schocksicher ist, ferner die Position «ANLEGEN» und die Position «GEÖFFNET» oder «ABLEGEN». In dieser Beziehung spielen die aus der Zeichnung ersichtlichen Anschlussstücke 37 der nicht dargestellten Gurtbänder des Gurtzeuges eine wesentliche Rolle, und zwar sind zwei Bauformen von Anschlussstücken 37 vorgesehen, die sich aus Figur 4 entnehmen lassen. Das dort rechts dargestellte Anschlussstück 37 hat einen im Querschnitt hakenförmigen Kopf 38, dessen Gestalt im wesentlichen dem hakenförmigen Randwulst 14 des Gehäuses 13 entspricht und mit dem der Kopf 38 korrespondierend zusammenwirkt, wenn das Anschlussstücke mit dem Schloss verbunden worden ist. Dabei gestattet der Kopf 38 aufgrund seiner nahezu spitz zulaufenden Frontseite ein Einschieben des Anschlussstückes in den ein Ringmaul 29 bildenden Schlitz zwischen Gehäuse 13 und Haltescheibe 28, wobei diese beiden Teile ein wenig auseinandergedrückt werden. Dies ist möglich, weil die Haltescheibe 28 in nicht gesicherter Position vermöge ihrer Lagerung kippen und eine zeitweilige Schrägstellung einnehmen kann. Die zweite Anschlussstück-Bauform, die in Figur 4 links zu sehen ist, hat einen im Querschnitt im wesentlichen rechteckigen Kopf 39, welcher zwar ebenfalls durch den Randwulst 14 des Gehäuses 13 festgehalten werden kann, aber ein Einschieben in das Ringmaul 29 entsprechend dem Kopf 38 nicht gestattet. Das Anschlussstück 37 mit Kopf 39 ist deshalb dazu vorgesehen, auch beim Öffnen des Zentralgurtschlosses 10 mit dem Schlossgehäuse 13 verbunden zu bleiben, damit das Schloss nicht jegliche Halterung am Gurtzeug verliert und verlorengehen kann.

Die beiden Schaltstellungen «GESICHERT» und «GEÖFFNET» bzw. «ABLEGEN» des Schlosses bzw. der Haltescheibe 28 werden mittels einer Vorrichtung zur drehenden Betätigung erzielt, nachfolgend kurz Drehscheibe 30 genannt. Es handelt sich allerdings, wie aus Figur 2 ersichtlich, nicht um eine kreisrunde Scheibe, sondern um ein quadratisches Gebilde, dessen Fläche der Oberseite der Haltescheibe 28 angepasst ist (Fig. 1) und das zur besseren Griffsicherheit mit einem Rippenkreuz 31 versehen ist. Die Drehscheibe 30 ist mittels vier Schrauben 32 an der Oberseite eines ringförmigen Kurvengliedes, hier Kurvenscheibe 33 genannt, befestigt, welche in einer oberen ringförmigen Ausnehmung 34 der Haltescheibe 28 eingelagert ist. Zur Sicherung der Kurvenscheibe 33 gegen Herausspringen unter dem Druck der Feder 23 dient ein Sprengring 35, der sich in eine Nut in der Wandung der Ausnehmung 34 der Haltescheibe 28 einpresst und zugleich von oben her auf einer Stufe der Kurvenscheibe 33 aufsitzt. Die radiale Erstreckung der Kurvenscheibe 33 ist so gross, dass sie den Überstand 21 des Hauptzapfens 18 nach innen hin überragt und dadurch auf der Zapfenoberfläche aufliegt, wenn sich die Haltescheibe 28 in ihrer Ruhestellung befindet.

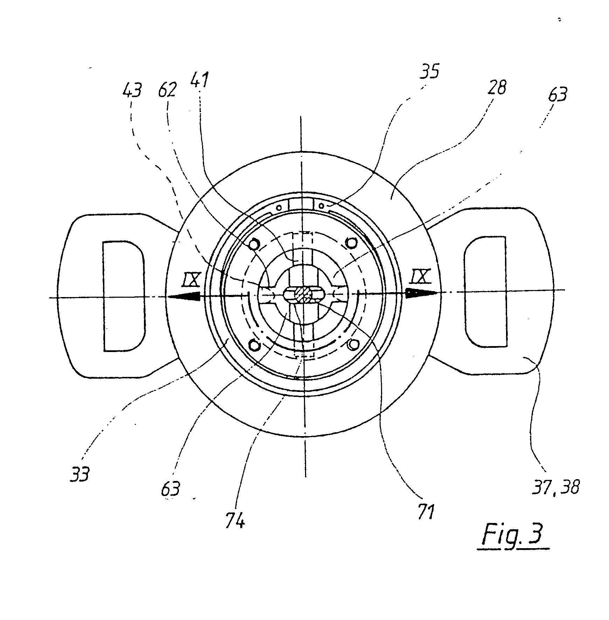

Der Hauptzapfen 18 gemäss den Figuren 5 und 6 hat unten einen Vierkant 36 als Verdrehsicherung, der in einer entsprechenden Ausnehmung im Boden des Gehäuses 13 einsitzt und von dem Gewindebolzen 16 durchquert wird. Der zylindrische Teil 20 des Hauptzapfens 18 ist innen hohl, und zwar in Form einer oben offenen Axialbohrung 60, in der ein zangenartig bewegliches Bauteil 61 angeordnet ist (Fig. 6). Dieses ragt nach oben hin über den Hauptzapfen 18 aufsatzförmig hinaus und bildet einen Sperranker mit zwei Flügeln 62, die mit zwei Sperrnocken 43 zusammenwirken, welche unterhalb der Flügel 62 an der inneren Ringfläche der Kurvenscheibe 33 einander gegenüberliegend angeordnet sind, so dass die Sperrankerflügel 62 mit den Sperrnocken 43 zur Deckung gelangen können, wenn die Drehscheibe 30 mit der daran befestigten Kurvenscheibe 33 einerseits und der Hauptzapfen 18 mit dem zangenartigen Bauteil 61 und den Flügeln 62 andererseits eine bestimmte Stellung zueinander einnehmen, die in Figur 3 dargestellt ist. Die Kurvenscheibe 33 und damit auch die mit ihr insoweit verbundene Haltescheibe 28 kann sich im einander überdeckenden Zustand von Flügeln 62 und Nocken 43 nicht nach oben hin gegenüber dem Hauptzapfen 18 bewegen, also weder kippen noch taumeln. Hierdurch ergibt sich die Schaltstellung «GESICHERT» des Zentralgurtschlosses.

Das zangenartig bewegliche Bauteil 61 ist im wesentlichen aus zwei Zangengliedern 63 zusammengesetzt, die in der Axialbohrung 60 des Hauptzapfens 18 spiegelbildlich angeordnet sind. Jedes Zangenglied 63, welches als Feingussteil hergestellt ist, hat ungefähr die Gestalt einer halbzylindrischen Schale, an deren oberer Aussenkante der Sperrankerflügel 62 angeformt ist, während an der unteren Aussenkante ein Drehlager 64 in Form einer nach aussen offenen Querbohrung vorgesehen ist. Durch die Drehlager 64 erstrecken sich Lagerstifte 65, die an entsprechenden Stellen quer durch den Hauptzapfen 18 verlaufen und die Axialbohrung 60 in einer solchen Weise schneiden, dass sich die Drehlager 64 auf ihnen abwälzen können. Da die Zangenglieder 63 eine sich parallel zu ihrer aufrechten Symmetrieebene nach oben hin verjüngende Gestalt aufweisen (Fig. 6), ist das einzelne Zangenglied 63 von einer äusseren Stellung, in der sein äusserer Teilzylindermantel an der inneren Oberfläche der Bohrung 60 anliegt, zu einer inneren Stellung, bei der sich die beiden Zangenglieder 63 berühren, schwenkbar, so dass sich die Sperrankerflügel 62 durch diese Schwenkbewegung nach innen verschieben und die Sperrnocken 43 freigeben. Zu dieser Beweglichkeit trägt bei, dass die Zangenglieder 63 unten im Bereich ihrer Schwenklager 64 so breit sind, dass sie in der Mitte der Axialbohrung 60 einander berühren und dort mit balligen Oberflächen 66 beim Verschwenken aneinander abwälzen.

Von unten her sind die Zangenglieder 63 federbelastet, so dass sie bestrebt sind, in ihre gespreizte Stellung gemäss Figur 6 zu schwenken und sich mit ihren Aussenflächen an das Innere der Axialbohrung 60 anzulegen. Hierzu ist eine Schraubendruckfeder 67 vorgesehen, die in einer Axialbohrung 68 des Gewindebolzens 16 ruht und nach oben hin in den Bewegungsbereich der Zangenglieder 63 hineinragt. Diese weisen ihrerseits eine entsprechend umgekehrte Axialbohrung 69 für das Oberende der Feder 67 auf, d.h. jedes Zangenglied hat eine halbe untere Axialbohrung 69 für die Feder 67.

In der Mitte der Drehscheibe 30 ist eine mit dem Finger zu betätigende Drucktaste 70 angeordnet, mittels der die Zangenglieder 63 und damit die Sperrankerflügel 62 gegen den Druck der Feder 67 nach innen geschwenkt werden können. Hierzu ist zwischen Drucktaste 70 und dem zangenartigen Bauteil 61 ein Übertragungsglied in Form eines an der Unterseite der Taste befestigten Druckstiftes 71 vorgesehen, der in den Innenraum zwischen den Zangengliedern 63 hineinragt und am unteren Ende eine Betätigungsfläche 72 hat, die in der gespreizten Stellung der Zangenglieder 63 bei gedrückter Taste 70 eine Kraft auf je einen Innenvorsprung 73 der Zangenglieder 63 ausübt und diese dadurch nach innen schwenkt, wobei sich die teilzylindrischen Schalen der Zangenglieder zur vollen Zylinderform vereinen, deren Innenraum im wesentlichen der Grösse des Druckstiftes 71 entspricht. Nahe seinem unteren Ende trägt der Druckstift 71 Sperrvorsprünge 74, vorzugsweise in Form eines den Druckstift durchsetzenden und ihn beiderseits überragenden Querstiftes. Jeder Sperrvorsprung 74 ist einem Zangenglied 63 zugeordnet, welches im Bereich der Auf- und Abbewegungen der Vorsprünge 74 mit kombinierten Ausschnitten 75 versehen ist, in die der betreffende Sperrvorsprung 74 eingreifen und zwei Funktionsstellungen einnehmen kann. Ein oberer Ausschnitteil 76 ist jeweils, wie sich aus Figur 6 ergibt, so gestaltet, dass der zugehörige Sperrvorsprung 74 darin eine Anlage findet, wenn die Zangenglieder 63 gespreizt sind, und ein unterer Ausschnitteil 77 gewährt dem Sperrvorsprung 74 nach Drücken der Drucktaste 70 soviel Bewegungsspielraum, dass die Zangenglieder 63 zur Mitte hin einschwenken können. Dabei unterliegen sowohl die Zangenglieder 63 als auch die Drucktaste 70 mit Druckstift 71 je einer zugeordneten Federbelastung in Richtung der Ausgangsposition, und zwar die Zangenglieder 63 mittels der bereits erwähnten Schraubendruckfeder 67 und die Drucktaste 70 mit Druckstift 71 mittels einer kegelstumpfförmigen Schraubendruckfeder 78, die sich zwischen der Unterseite der Drucktaste 70 und einem Ringteller 79 abstützt, der den Druckstift 71 umgibt und oben auf dem zangenartigen Bauteil 61 aufliegt.

Auf der Ringfläche des Hauptzapfens 18, die die Axialbohrung 60 zur Aufnahme der Zangenglieder 63 umrundet, sind noch zwei radial fluchtend verlaufende Führungsglieder in Form von Erhöhungen oder Nocken 41 zur Steuerung der Bewegungen der kippbeweglichen Haltescheibe 28 über das Kurvenglied 33 angeordnet, die an ihren Oberseiten gewölbte Gleitflächen zur Berührung der Kurven des scheibenförmigen Kurvengliedes aufweisen (Fig. 5). Diese Nocken können auch als am Hauptzapfen 18 befestigte, hier nicht dargestellte Rollen zwecks Verminderung der Reibung am Kurvenglied 33 ausgebildet sein.

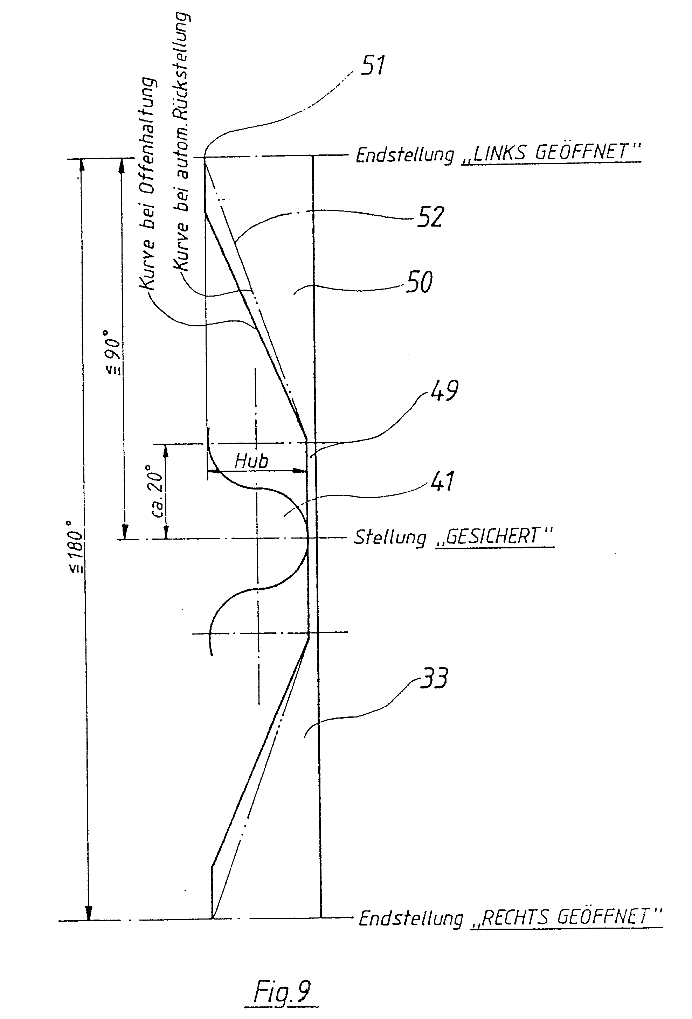

Das Kurvenglied 33 hat zwei übereinstimmende Kurven, die sich jeweils aus mehreren Kurvenabschnitten zusammensetzen, welche insbesondere aus Figur 9 zu entnehmen sind. Der Zweck zweier Kurven besteht darin, die erforderlichen Schaltstellungen des Schlosses sowohl bei Rechts- als auch bei Linksdrehung der Drehscheibe 30, 31 erreichen zu können, d.h. für beide Hände der benutzenden Person die bequemsten und damit sichersten Bewegungsabläufe beim Öffnen des Schlosses zu gewährleisten. Dies ergibt sich u.a. aus Figur 2 der Zeichnung, wonach die Drehscheibe 30 gemäss den eingravierten Pfeilen 53 sowohl im Uhrzeigersinn als auch entgegengesetzt betätigbar ist.

In Figur 9 nimmt der dort dargestellte Führungsnocken 41 im Verhältnis zur Kurvenscheibe 33 die Schaltstellung «GESICHERT» ein, während die Schaltstellung «ABLEGEN» in beiden Drehrichtungen der Drehscheibe 30 nach jeweils 90 Grad erreicht wird. Diese beiden Schaltstellungen des Zentralgurtschlosses unterliegen also der Betätigung durch die Drehscheibe 30, 31, die sich entsprechend auf die fest damit verbundene Kurvenscheibe 33 auswirkt. Der Hauptzapfen 18 mit den Führungsnocken 41 verändert seine Stellung im Schloss demgegenüber nicht, so dass also die Kurven der Kurvenscheibe 33 über diesen Nocken 41 abgleiten. Dies bedeutet zugleich, dass auch das zangenartige Bauteil 61 feststeht, und somit machen auch die Drucktaste 70 und der Druckstift 71 die Drehungen der Drehscheibe 30, 31 nicht mit. In dieser Beziehung kann die Drucktaste 70 zweckmässigerweise mit einer Gleitfassung 80 eingefasst sein, welche die Reibung zwischen Drucktaste und Drehscheibe herabsetzt (Fig. 6).

Die dritte erforderliche Schaltstellung des Schlosses muss das «ANLEGEN» der Gurte ermöglichen, also das Einschieben der Anschlussstücke 37 in das Ringmaul 29, damit die Köpfe 38 der Anschlussstücke über den Randwulst 14 einrasten können. Hierzu bedarf es einer entsprechenden Öffnung des Ringmaules 29 an der betreffenden Stelle, wozu die Haltescheibe 28 dort angehoben werden muss, d.h. die Haltescheibe 28 muss gegenüber dem Gehäuse 13 gekippt und damit auch gegenüber der Längsachse des Hauptzapfens 18 schräg eingestellt werden. Dieses wiederum ist nur möglich, wenn die Überdeckung der Sperrnocken 43 durch die Sperrankerflügel 62 vorübergehend aufgehoben wird, weil sich sonst das Ringmaul 29 gar nicht öffnen kann. Hier setzt der Funktionszweck der Drucktaste 70 ein, die nachstehend im Zusammenhang mit der Handhabung des Zentralgurtschlosses als ganzes beschrieben wird:

Das Zentralgurtschloss 10 befindet sich, am Anschlussstück 37, 39 hängend, etwa in der vorderen Körpermitte des Benutzers, wo es mit beiden Händen bequem erreicht werden kann. Es nimmt mit seiner Drehscheibe 30, 31 die in Figur 2 gezeigte Stellung ein; dies entspricht im Inneren des Schlosses dem in den Figuren 3, 4 und 7 dargestellten Zustand. Die Schaltstellung des Schlosses heisst «GESICHERT». Hierbei liegen die Sperrankerflügel 62 genau über den beiden Sperrnocken 43 am inneren Umfang der Kurvenscheibe 33. Diese und die Haltescheibe 28 können sich deshalb nicht nach oben bewegen; ein Öffnen des Schlosses ist ausgeschlossen.

Zum Anlegen des Gurtzeuges, d.h. zum Einstecken der beispielsweise fünf Anschlussstücke 37, 38 der sternförmig zum Zentralgurtschloss 10 verlaufenden Gurtbänder des fraglichen Gurtzeuges (nicht dargestellt) in das Ringmaul 29 des Schlosses, drückt der Benutzer mit einem beliebigen Finger auf die Drucktaste 70, wodurch sich der Druckstift 71 gegen die Kraft der Feder 78 nach unten bewegt und mit seiner Betätigungsfläche 72 gegen die Innenvorsprünge 73 der Zangenglieder 63 anläuft. Gleichzeitig treten die Sperrvorsprünge 74 am Druckstift 71 aus den oberen Teilen 76 der Ausschnitte 75 in den Zangengliedern 63 nach unten hinaus und in die unteren Teile 77 der Ausschnitte 75 ein. Nun können die Zangenglieder 63 ungehindert nach innen schwenken, bis sie mit ihren vier Längskanten zusammenstossen. Dadurch verlassen auch die Sperrankerflügel 62 die Projektion des Hauptzapfens 18 und der Sperrnocken 43 in Richtung nach innen, so dass einem Kippen der Haltescheibe 28 nichts mehr im Wege steht. Wenn der Benutzer jetzt ein Anschlussstück 37, 38 in das Ringmaul 29 einschiebt, kann das Anschlussstück hinter den Randwulst 14 rasten, ohne dass die Drehscheibe 30, 31 aus ihrer Schaltstellung «GESICHERT» bewegt zu werden braucht. Hiermit ist eine entsprechende Erhöhung der Sicherheit der Haltefunktion des Schlosses verbunden, denn nach dem Einrasten des betreffenden Anschlussstückes schnappt die Haltescheibe 28 unter dem Druck der Feder 23 sogleich wieder zurück und schliesst das Ringmaul 29, und wenn schliesslich der Finger von der Drucktaste 70 weggenommen wird, treten auch die Sperrankerflügel 62 wieder über die Sperrnocken 43. Dies geschieht unter dem Druck der Feder 67, welche die Zangenglieder 63 spreizt, und der sich gleichzeitig nach oben bewegende Druckstift 71 bewirkt, dass die Sperrvorsprünge 74 in die oberen Teile 76 der Ausschnitte 75 eintreten, wodurch die Zangenglieder 63 in ihrer Spreizstellung blockiert werden. Nur in dieser Lage – Schaltstellung «GESICHERT» – können die Sperrnocken 43 unter die Flügel 62 gelangen.

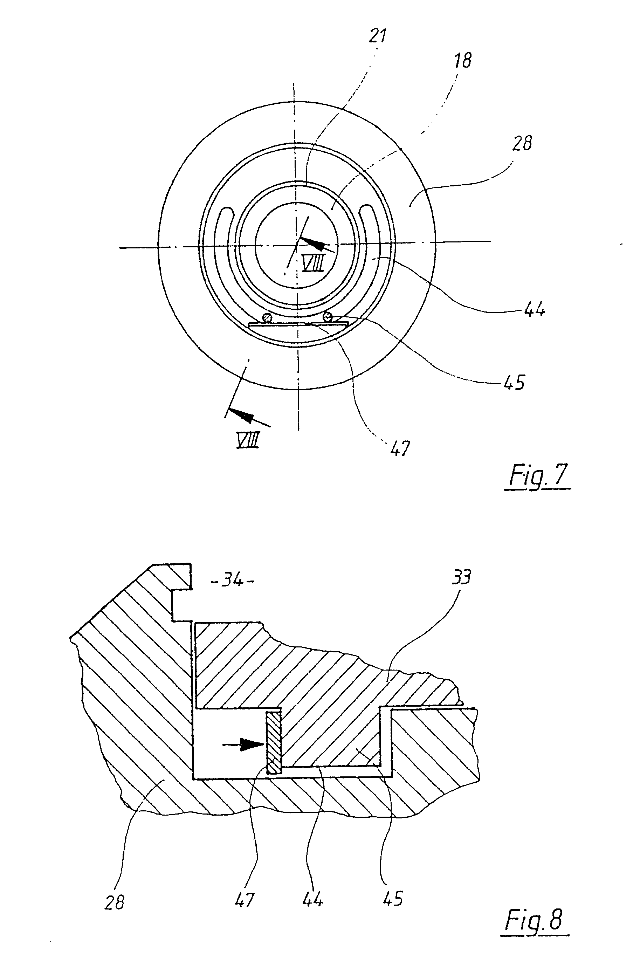

Aus den Figuren 7 und 8 ergibt sich noch eine weitere Ausbildung der Kurvenscheibe 33, durch die ein Überdrehen der Drehscheibe 30 verhindert und ausserdem das Einhalten der Position «GESICHERT» gewährleistet wird. Hierzu hat die Haltescheibe 28 auf dem Boden ihrer oberen Ausnehmung 34 eine teilkreisförmige Nut 44, in die zwei Anschlagstifte 45 eintauchen, welche an der Unterfläche der Kurvenscheibe 33 befestigt sind. Die Nut 44 erstreckt sich über einen Sektor, der jeweils den beiden Öffnungsstellungen der Drehscheibe 30 entspricht. Im mittleren Bereich der Nut 44 ist eine Rastfeder 47 als Rückstellfeder eingelagert, die die Drehscheibe 30 in dem Sinne kontrolliert, dass das Schloss mit Unterstützung der Kegelstumpffeder 23 immer wieder selbsttätig in die Position «GESICHERT» zurückkehrt.

In der «GESICHERT»-Position des Schlosses verlaufen die beiden Kurven der Kurvenscheibe 33 im Verhältnis zu den nockenförmigen Führungsgliedern 41 an der oberen Ringfläche des Hauptzapfens 18 so, wie es sich aus Figur 9 ergibt. Hier ruht die Kurvenscheibe 33 mit einem Kurvenabschnitt 49, welcher parallel der Oberfläche des Hauptzapfens 18 verläuft, auf dem zugeordneten Führungsglied 41, so dass die Kurvenscheibe 33 und damit auch die Haltescheibe 28 ihre tiefste Lage in bezug auf das Schlossgehäuse 13 einnehmen. Nur in dieser Lage – Schaltstellung «GESICHERT» – können die Sperrnocken 43 unter die Sperrankerflügel 62 an den oberen äusseren Enden der Zangenglieder 63 gelangen.

Zum schnellen und gleichzeitigen Lösen aller Anschlussstücke 37, 38, z.B. bei einem Fallschirmspringer nach der Landung, fasst der Benutzer mit einer Hand an die Drehscheibe 30 und verdreht diese in beliebiger Richtung zügig bis in die rechte oder linke Position «ABLEGEN» (Fig. 2). Dieses Verdrehen kann ohne besondere Aufmerksamkeit bis zum fühlbaren Anschlag des Anschlagstiftes 45 an das jeweilige Ende der Nut 44 erfolgen, denn weiter lässt sich die Drehscheibe 30 nicht drehen. Hierbei verschwenken die Sperrankerflügel 62 bezüglich der Kurvenscheibe 33 und der Sperrnocken 43 um einen rechten Winkel, wobei allerdings zu berücksichtigen ist, dass der Hauptzapfen 18 mit dem zangenartigen Bauteil 61 unverändert feststeht, während sich die Kurvenscheibe 33 dreht. Beim Verschwenken treten nicht nur die Sperrnocken 43 aus der Abdeckung durch die Sperrankerflügel 62 heraus, sondern die beiden Kurven der Kurvenscheibe 33 gleiten auch auf den Führungsgliedern 41 über die das Anlegen gestattende Stellung hinaus, und dann werden jeweils Kurvenabschnitte 50 (Fig. 9) wirksam, welche schräg verlaufen und mit der Mittenlängsachse des Schlosses einen mässig spitzen Winkel einschliessen, welcher in Verbindung mit der Länge der Abschnitte 50 einen Hub der Kurvenscheibe 33 erzeugen, der gemäss Figur 9 dem Ausmass der Nocken 41 entspricht. Gleichzeitig ist dieser Hub so gross, dass er ausreicht, um die hakenförmigen Teile der Anschlussstücke 37, 38 einerseits und des Randwulstes 14 andererseits voneinander abgleiten zu lassen. Da die Kurvenscheibe 33 mit der Haltescheibe 28 fest verbunden ist und sich an der Haltescheibe 28 die Nabe 27 mit dem äusseren Radialflansch 26 befindet, wird dieser Flansch angehoben und befördert die im Schlossgehäuse 13 lagernden Anschlussstücke nach oben aus dem Ringmaul 29 hinaus. Im Gegensatz zum Vorgang beim Anlegen, wo die Haltescheibe 28 kippt bzw. taumelt, bewegt sich die Haltescheibe 28 also beim Ablegen achsparallel zum Hauptzapfen 18 vom Gehäuse 13 weg nach oben, was durch die Kurvenscheibe 33 mit ihrem Abschnitt 50 und durch die Ausbildung des Hauptzapfens 18 gesteuert wird.

Wie sich aus Figur 9 entnehmen lässt, können die Enden der Kurvenscheibe 33 im Bereich der beiderseitigen Schaltstellungen «ABLEGEN» alternativ ausgebildet sein, und zwar können sich an die Abschnitte 50 entweder kurze Abschnitte 51 anschliessen, die parallel dem mittleren Abschnitt 49 verlaufen, oder die Kurve kann jeweils an der Stelle der beiden Öffnungspositionen auch eine Spitze bilden, was sich in Figur 9 aus den strichpunktierten Linien 52 schliessen lässt. Dies bedeutet, dass die Schaltstellung «ABLEGEN» entweder in einer stabilen Lage gehalten wird oder aufgrund des labilen Zustandes gemäss den Kurvenabschnitten 52 dazu eingerichtet ist, dass sich das Schloss selbsttätig zurückstellt, d.h. der jeweilige Nocken 41 gleitet unter der Wirkung der Feder 23 nach Loslassen der Drehscheibe 30 von allein wieder bis zu der jeweiligen Stellung «GESICHERT» zurück. Es bleibt dem besonderen Anwendungszweck des betreffenden Zentralgurtschlosses überlassen, welche Kurvenform diesbezüglich an der Kurvenscheibe 33 ausgebildet wird.

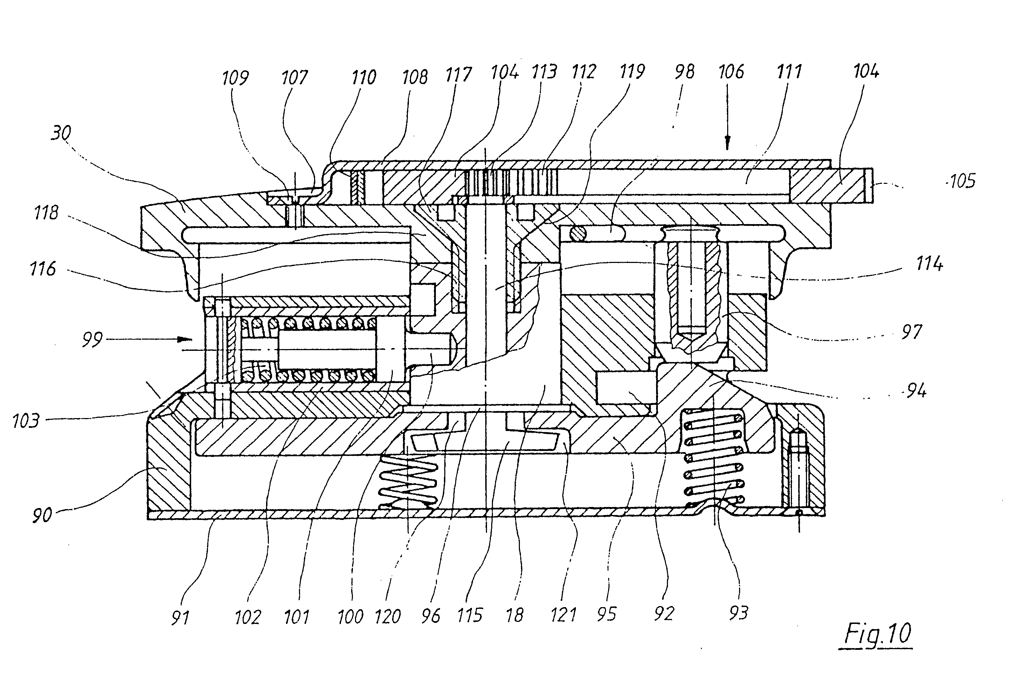

In den Figuren 10–12 ist ein zweites Ausführungsbeispiel der Erfindung dargestellt. Es handelt sich um ein Zentralgurtschloss mit den Gattungsmerkmalen der auf Seite 11 erwähnten Patentanmeldung A 22 898 XI/62c, also mit Ankerbolzen und Führungskreuz zum zentralen Verbinden von beispielsweise vier (nicht dargestellten) Gurten mittels Anschlussstücken. Das Schloss hat ein Gehäuse 90 mit Bodenplatte 91, mittigem Hauptzapfen 18 und Drehbetätigungsvorrichtung 30 in Form einer Drehscheibe. Im Schlossgehäuse 90 sind parallel zur Bodenplatte 91 schlitzförmige Ausnehmungen 92 vorgesehen, in die hinein die Anschlussstücke der zu verbindenden Gurte gesteckt werden. Im mittleren Bereich der axialen Projektion der Ausnehmungen 92 sind axial verschiebliche, von jeweils einer Schraubendruckfeder 93 belastete Ankerbolzen 94 angeordnet, die gemäss Figur 10 in den Lichtraum der Ausnehmungen 92 eingreifen und die Anschlussstücke damit festhalten können. Die Ankerbolzen 94 sind untereinander durch ein Führungskreuz 95 einstückig verbunden, welches von unten her unter Zwischenschaltung eines Flansches 96 gegen den Hauptzapfen 18 anliegt. Da dieser im Gehäuse 90 axial verschoben werden kann, indem mit der Hand auf die Drehscheibe 30 gedrückt wird, lässt sich auf diese Weise das Führungskreuz 95 mit den Ankerbolzen 94 zur Bodenplatte 91 hin verlagern, wodurch die Ankerbolzen 94 nach unten aus den schlitzförmigen Ausnehmungen 92 entfernt werden, so dass die Gurtanschlussstücke freigegeben sind und sich ohne weiteres vom Schloss lösen können.

Damit das Schloss beim Öffnen und Lösen der Anschlussstücke nicht vom Gurtzeug abfällt und verlorengeht, ist ein Ankerbolzen 94 mit einer Vorrichtung kombiniert, die an dieser einen Stelle die Trennung des betreffenden Anschlussstückes vom Schloss verhindert, so dass es an dem zugehörigen Gurt hängenbleibt. Die Vorrichtung besteht aus einem Hilfsbolzen 97, der oberhalb des betreffenden Ankerbolzens 94 in einer entsprechenden Gehäusebohrung axialbeweglich gelagert ist und sich mit seinem oberen Ende von unter her an die Drehscheibe 30 anlegt. Wenn die Drehscheibe 30 mit dem Hauptzapfen 18 beim Öffnen des Schlosses in das Gehäuse 90 hineingedrückt wird, erfasst diese Bewegung auch den Hilfsbolzen 97 und drückt ihn in gleicher Weise nach unten in die betreffende schlitzförmige Ausnehmung 92 hinein, wie der dortige Ankerbolzen 94 die Ausnehmung verlässt, d.h. der Hilfsbolzen 97 rückt dem Ankerbolzen 94 ohne Unterbrechung der Haltewirkung auf das betreffende Anschlussstück nach, so dass dieses das Schloss nicht verlassen kann, vielmehr bleibt das Schloss an dem Anschlussstück hängen. Wenn der Hauptzapfen 18 im Gehäuse 90 bei entsprechender Stellung der Drehscheibe 30 wieder nach oben bewegt wird, was unter dem Druck der Federn 93 geschieht, schiebt der in Figur 10 dargestellte Ankerbolzen 94 auch den Hilfsbolzen 97 wieder mit nach oben und tritt an seiner Stelle in die schlitzförmige Ausnehmung 92 und in das darin befindliche Anschlussstück (nicht dargestellt) ein. Zur Sicherung gegen Verlust wird der Hilfsbolzen 97 oben von einem Federclip 98 festgehalten.

Dem Hilfsbolzen 97 diametral gegenüber ist im Schlossgehäuse 90 eine Fixiervorrichtung 99 für die Schaltestellungen des Hauptzapfens 18 angeordnet, die im wesentlichen aus einem Fixierbolzen 100 mit Führungskolben 101 und Führungszylinder 102 sowie einer Schraubendruckfeder 103 zusammengesetzt ist. Die letztgenannte beaufschlagt den Führungskolben 101 und damit den Fixierbolzen 100 in Richtung auf den Hauptzapfen 18, welcher an einem Teil seines Umfanges mit einer eingefrästen kombinierten Führungsbahn (nicht dargestellt) versehen ist, in der sich der Fixierbolzen 100 gleitend über verschiedene Raststellungen bewegt, wenn die Drehscheibe 30 und damit der Hauptzapfen 18 ihrerseits in die vorgesehenen Schaltstellungen sich bewegen.

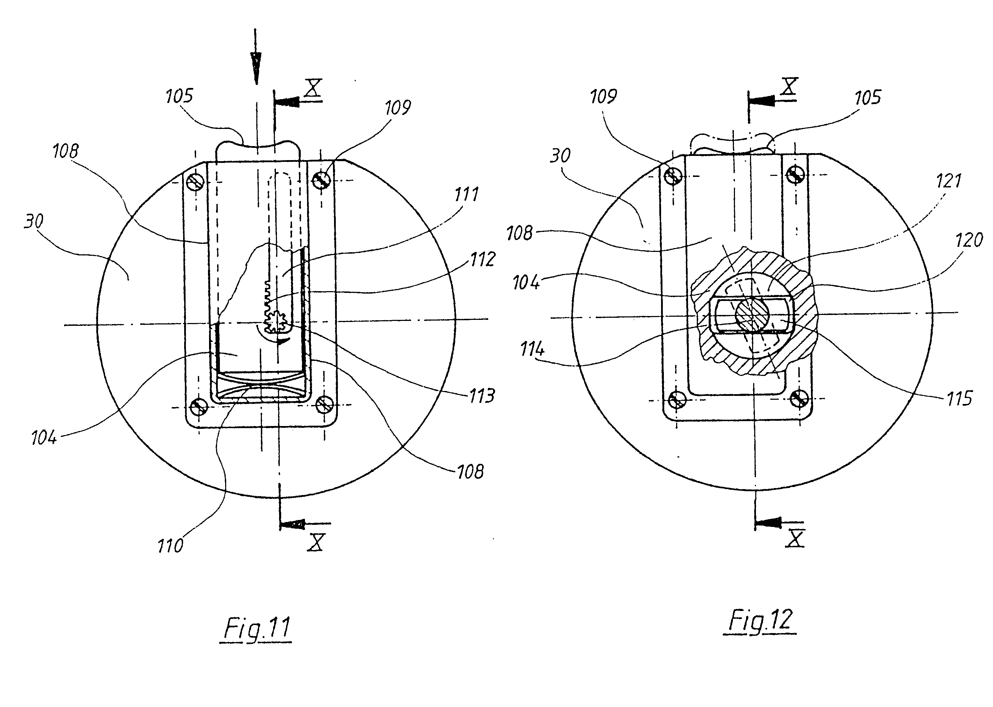

Wie sich insbesondere aus den Figuren 11 und 12 entnehmen lässt, trägt die Drehscheibe 30 obenauf eine flache, längliche Schiebetaste 104, deren Fingermulde 105 seitlich über die Drehscheibe 30 hinausragt, so dass sie leicht und sicher erreicht und betätigt werden kann. Die Schiebetaste 104 ist in einer taschenartigen Schiene 106 von entsprechender Grösse längsverschieblich geführt, wobei die Schiene 106 einerseits aus einer in die Oberfläche der Drehscheibe 30 eingefrästen Nut 107 und andererseits aus einer geprägten Blechkappe 108 zusammengesetzt ist. Die Blechkappe 108 ist mittels vier Schrauben 109 auf der Drehscheibe 30 befestigt und an einer Schmalseite zum Durchlass der Schiebetaste 104 mit Fingermulde 105 offen. Im Tiefsten der durch die Nut 107 und die Blechkappe 108 gebildeten Schiene 106 als Bewegungsbahn der Schiebetaste 104 ist eine Doppelblattfeder 110 eingelagert, welche die Schiebetaste 104 auf Druck belastet, so dass die Kraft der Feder 110 beim Pressen der Fingermulde 105 überwunden werden muss und die Schiebetaste 104 einer entsprechenden Rückstellung unterliegt.

In die Schiebetaste 104 ist ein aus deren Längsmitte versetzter Längsschlitz 111 eingearbeitet, der an seiner Innenkante mittels einer entsprechenden Verzahnung als Zahnstange 112 ausgebildet ist. Diese kämmt mit einem Ritzel 113, welches von unten her in den Lichtraum des Längsschlitzes 101 hineinragt und sich am oberen Ende eines Drehstiftes 114 befindet, der axial im Hauptzapfen 18 als Übertragungsglied für die Bewegungen der durch Fingerdruck zu betätigenden linear verschieblichen Vorrichtung bzw. Schiebetaste 104 auf ein Sicherungsglied 115 angeordnet ist, das auf die Ankerbolzen 94 wirkt. Ritzel 113, Drehstift 114 und Sicherungsglied 115 bilden also eine Einheit und sind vorzugsweise einstückig hergestellt. Im einzelnen ist die Lagerung des Drehstiftes 114 im Schloss wie folgt gestaltet: Der Hauptzapfen 18 hat oben eine Gewindebohrung 116, in die eine besonders geformte Senkkopfschraube 117 eingeschraubt ist, welche in der Mitte der Drehscheibe 30 sitzt, wo diese mit einer unteren Nabe 118 versehen ist, die auf dem Hauptzapfen 18 ruht und mit diesem fluchtet. Die Nabe 118 hat eine Mittenbohrung 119 mit entsprechend der Form der Schraube 117 gestalteter kegelstumpfförmiger Erweiterung an ihrem Oberende. Die Senkkopfschraube 117 durchdringt die Nabe 118 und taucht mittels der Gewindebohrung 116 in den Hauptzapfen 18 ein, wobei die Oberfläche des Schraubenkopfes mit dem Boden der Nut 107 bündig liegt, so dass die Schraube 117 die Bewegungen der Schiebetaste 104 nicht behindern kann. Sowohl der Hauptzapfen 18 als auch die Senkkopfschraube 117 weisen jeweils eine Axialbohrung zur drehbeweglichen Führung des Drehstiftes 114 auf, dessen Längsachse sich mit der Zentralachse des Schlosses deckt, so dass das Ritzel 113 in der Mitte der Drehscheibe 30 liegt. Im übrigen verbindet die Schraube 117 die Drehscheibe 30 starr mit dem Hauptzapfen 18.

Das am unteren Ende des Drehstiftes 114 angebrachte Sicherungsglied 115 ist als T-förmiger Riegel ausgebildet, welcher das Führungskreuz 95 in der Mitte durchsetzt, wozu das Führungskreuz 95 dort mit einem Langloch 120 versehen ist, dessen Länge der Spannweite des T-förmigen Riegels 115 entspricht, so dass bei fluchtender Stellung der beiden Teile das Führungskreuz 95 mit den Ankerbolzen 94 in axialer Richtung des Hauptzapfens 18 über das Sicherungsglied 115 hinwegbeweglich ist (Fig. 12). Das Langloch 120 ist, wie sich insbesondere aus Figur 10 entnehmen lässt, an der Unterseite des Führungskreuzes 95 mit einer kreisförmigen Einsenkung 121 umgeben, deren Durchmesser so gross ist, dass der T-Riegel 115 darin quergestellt werden kann. In einer solchen Querstellung lässt sich das Führungskreuz 95 nicht an dem T-Riegel-Sicherungsglied 115 nach unten hin vorbeibewegen. Die Einstellung des Drehstiftes 114 mit Ritzel 113 und Sicherungsglied 115 im Verhältnis zum Hauptzapfen 18, zur Drehscheibe 30 und zur Schiebetaste 104 wird beim Zusammenbau des Schlosses derart vorgenommen, dass das Sicherungsglied 115 (T-Riegel) bei entspannter Doppelblattfeder 110 und damit nicht eingedrückter Schiebetaste 104 gegenüber dem Langloch 120 quersteht, so dass das Führungskreuz 95 mit den Ankerbolzen 94 gegen Bewegungen zur Bodenplatte 91 hin verriegelt ist. In dieser Stellung können die Anschlussstücke also die schlitzförmigen Ausnehmungen 92 auch bei schockartiger Belastung des Schlosses nicht verlassen.

Zum Gebrauch des Zentralgurtschlosses gemäss den Figuren 10–12 sind drei Schaltstellungen erforderlich, nämlich «ANLEGEN», «GESICHERT» and «ABLEGEN». In der Position «GESICHERT» nehmen die Schlossteile die in Figur 10 gezeigte Stellung ein, d.h. der Hauptzapfen 18 befindet sich in seiner obersten Stellung, die Fixiervorrichtung 99 ist eingerastet und das Sicherungsglied 115 sitzt quer in der Einsenkung 121, so dass sich Führungskreuz 95 und Ankerbolzen nicht axial verschieben können. Zum Öffnen des Schlosses und Ablegen der Gurte dreht der Benutzer die Drehscheibe 30 mit einer Hand um die Längsmittenachse in die Schaltstellung «ABLEGEN», wobei sich sowohl der Hauptzapfen 18 als auch die Schiene 106 mit der Schiebetaste 104 mitdrehen. Der Fixierbolzen 100 gleitet dabei in seiner nicht dargestellten Bahn im Hauptzapfen 18 ab. Da die Schiebetaste 104 in Ruhe bleibt, drehen sich auch der Drehstift 114 und der T-Riegel 115 mit, und zwar mittels Steuerung der Fixiervorrichtung 99 soweit, bis T-Riegel 115 und Langloch 120 fluchten (Fig. 12). Nun kann der Benutzer die Drehscheibe 30 axial zum Gehäuse 90 hin eindrücken, der Hauptzapfen 18 verschiebt sich dabei zur Bodenplatte 91 hin, und gleichzeitig drückt er über den Flansch 96 auf das Führungskreuz 95 und nimmt dieses auf seinem Weg nach unten mit. Da die Ankerbolzen 94 mit dem Führungskreuz 95 einstückig verbunden sind, treten auch sie nach unten hin aus den schlitzförmigen Ausnehmungen 92 heraus, und die Anschlussstücke sind frei und können die Ausnehmungen 92 verlassen. Das Schloss ist geöffnet.

Zum Anlegen des Gurtzeuges wird das Schloss durch Rückdrehen der Drehscheibe 30 wieder in seine Schaltstellung «GESICHERT» gebracht (Fig. 10). Nun würden die unverrückbar in die Ausnehmungen 92 eingreifenden Ankerbolzen 94 ein Einschieben der Anschlussstücke wegen des quergestellten Sicherungsgliedes 115 nicht zulassen, wenn nicht durch einfachen Fingerdruck auf die Schiebetaste 104 mit Fingermulde 105 für eine kurzzeitige Entriegelung des Sicherungsgliedes 115 gesorgt werden könnte. Beim Eindrücken der Schiebetaste 104 teilt die Zahnstange 112 dem Ritzel 113 eine Drehbewegung mit, die von dem Drehstift 114 auf das Sicherungsglied 115 übertragen wird, und zwar verdreht sich der T-Riegel 115 in der Einsenkung 121 gemäss Figur 12 um ungefähr neunzig Grad in eine mit dem Langloch 120 fluchtende Lage, wodurch die verriegelte Stellung des Führungskreuzes 95 vorübergehend aufgehoben wird. Wenn der Benutzer nun ein Anschlussstück in eine Ausnehmung 92 einschiebt, kann er den zur Erleichterung der Bewegung abgeschrägten Ankerbolzen 94 mit dem Führungskreuz 95 dort nach unten bewegen, d.h. das Führungskreuz 95 stellt sich für kurze Zeit schräg zur Bodenplatte 91 ein, und sobald das Anschlussstück mit seinem Loch für den Ankerbolzen 94 genügend weit in die Ausnehmung 92 eingetreten ist, schnappt der Ankerbolzen 94 unter dem Druck seiner Feder 93 wieder nach oben, und das Führungskreuz 95 verläuft wieder parallel der Bodenplatte 91. Dieser Vorgang wiederholt sich gemäss der Anzahl der im Schloss vorgesehenen Anschlussmöglichkeiten für Anschlussstücke von Gurten, und so lange muss der Benutzer die Schiebetaste 104 mit dem Finger eingedrückt halten, es sei denn, er zöge es vor, die Schiebetaste bei jedem Einschieben eines Anschlussstückes gesondert zu betätigen. Ist das Einschieben der Anschlussstücke vollständig beendet, lässt der Benutzer die Schiebetaste 104 wieder los, diese kehrt unter dem Druck der Doppelblattfeder 110 in ihre Ausgangsstellung zurück, und dies gilt aufgrund des Drehstiftes 114 als Übertragungsglied auch für das Sicherungsglied 115, d.h. das Schloss ist sicher verriegelt, ohne dass der Benutzer zum Anlegen die Drehscheibe 30 als solche hätte betätigen müssen. An der Drehscheibe selbst brauchen daher nur zwei Schaltstellungen vorgesehen zu werden.

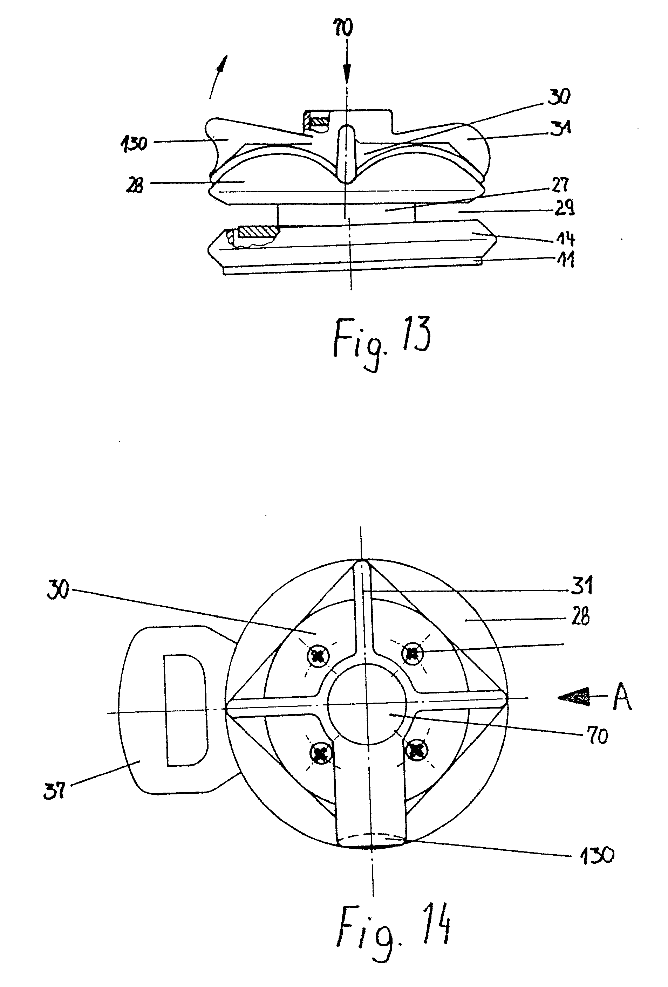

Bei einem weiteren Ausführungsbeispiel entsprechend den Figuren 13 und 14 ist bei einem Glockenschloss eine gezielte Auslösung und Freigabe der Schultergurtlaschen (nicht dargestellt) vorgesehen. Hierzu ist an der Drehscheibe 30 des Schlosses über den für die gesonderte Auslösung vorgesehenen Schultergurtlaschen eine Griffmulde 130 vorgesehen, wobei für die Funktion des Schlosses im wesentlichen der gleiche Ablauf wie bei dem zuvor eingehend erläuterten Schloss gilt.

Die Betätigung der Fingertaste 70 hebt die Verriegelung des Schlosses auf, so dass die Haltescheibe 28 kippbar ist. Während beim Einschieben der Gurtanschlussstücke bei gedrückter Fingertaste 70 das Kippen der Haltescheibe 28 durch den Druck der entsprechend formmässig gestalteten Gurtanschlussstücke bewirkt wird, wird die entsprechende Kippbewegung der Haltescheibe 28 bei der gezielten Auslösung durch ein Anheben der zu diesem Zweck über den auszulösenden Gurtanschlussstücken mittels der an der Drehscheibe 30 ausgebildeten Griffmulde 130 erreicht.

Sobald also der Benutzer die Verriegelung des Schlosses durch das Betätigen der Fingerdrucktaste 70 aufgehoben hat, kann er mittels der über den für die Auslösung vorgesehenen Schultergurtlaschen angeordneten Griffmulde 130, vorzugsweise mit dem Daumen, die Drehscheibe 30 und somit die mit dieser festverbundene Haltescheibe 28 so weit kippen, dass Haltescheibe 28 und Glockenrand eine Ebene bilden, mit der Folge, dass die Ansätze der Schultergurtlaschen aus dem Schloss herausgleiten können. Sobald die Gleichstellung der Bauteile erreicht ist, können die in aller Regel unter dem leichten Gurtzug einer Aufrollvorrichtung stehenden Anschlussstücke der Schultergurte aus dem Schloss herausgleiten, während die weiteren Gurtanschlussstücke nach wie vor durch die Haltescheibe 28 im Schloss festgehalten werden.

## Patentansprüche

1. Zentralgurtschloss für Anschnallgurte, insbesondere von Fliegern oder Fallschirmspringern, zum schnell und gleichzeitig lösbaren Verbinden mehrerer mit Anschlussstücken versehener, an einem zentralen Punkt zusammenlaufender Gurte, welches Einrichtungen zum gesicherten Festhalten sowie zum Freigeben der Anschlussstücke enthält, wobei diese Einrichtungen mit einer manuell zu bedienenden Drehbetätigungsvorrichtung, vorzugsweise einer Drehscheibe oder einem Drehkreuz, wirkungsmässig gekoppelt sind, die oberhalb eines mittigen Zapfens angeordnet ist, an dem die Bewegungsvorgänge im Schloss orientiert sind, dadurch gekennzeichnet, dass die Drehbetätigungsvorrichtung (30) eine gesonderte, unabhängig von der Betätigung der Drehbetätigungsvorrichtung (30) linear zu verschiebende Fingertaste (70, 104) aufweist, die bei Verschiebung mittels wenigstens eines Übertragungsgliedes (71, 114) die Verriegelung (62, 115) der die Anschlussstücke gegen unbeabsichtigtes Lösen sichernden Einrichtungen (28, 94) aufhebt, wobei die linear verschiebliche Fingertaste (70, 104) entgegen ihrer vorgesehenen Druckrichtung federbelastet ist, und bei Rückkehr in ihre Ausgangsstellung die Verriegelung (62, 115) wieder in deren Sperrstellung bewegt.

2. Zentralgurtschloss nach Anspruch 1, mit einem Schlossgehäuse mit hakenförmigem Randwulst und mit einer gegenüber dem Randwulst angeordneten, mittels einer Nabe auf einem gehäusefesten Zapfen senkrecht zur Grundplatte des Schlossgehäuses gegen Federwirkung verschieblichen und bei wenigstens einer das Einschieben der Anschlussstücke zulassenden Stellung der Drehbetätigungsvorrichtung kippbeweglichen Scheibe, wobei die Nabe an ihrem unteren Ende einen zumindest teilweisen Radialflansch aufweist, dessen Aussenrand bis unter die eingerasteten Anschlussstücke der Gurte reicht, und wobei die Drehbetätigungsvorrichtung mit einem Kurvenglied verbunden ist, welches die Bewegungen der kippbeweglichen Scheibe mittels an dem gehäusefesten Zapfen angebrachter Führungsglieder steuert, die entsprechend an den Kurven gleiten oder sich abwälzen, wenn die Drehbetätigungsvorrichtung verstellt wird, und wobei der gehäusefeste Zapfen an seiner Oberseite einen Aufsatz trägt, welcher oberhalb der Führungsglieder mit einer Sperre in Form eines zweiflügeligen Sperrankers für die kippbewegliche Scheibe in der verriegelten Schlossstellung versehen ist, dadurch gekennzeichnet, dass der Zapfen (18) eine oben offene Axialbohrung (60) aufweist, in der ein zangenartig bewegliches Bauteil (61) angeordnet ist, dessen Zangenglieder (63) die Flügel des Sperrankers (62) ausbilden, die sich in der Funktionsstellung über Sperrnocken (43) lagern, welche sich am inneren Umfang des ringförmigen Kurvengliedes (33) befinden, wobei die Zangenglieder (63) zu ihrer Bewegung von dem Übertragungsglied (71) zu der als Fingertaste ausgebildeten linear verschieblichen Vorrichtung (70) beaufschlagt sind, die in der Mitte der Drehbetätigungsvorrichtung (30) angeordnet ist.

3. Zentralgurtschloss nach Anspruch 2, dadurch gekennzeichnet, dass die in der Axialbohrung (60) des Zapfens (18) spiegelbildlich angeordneten und schwenkbeweglichen Zangenglieder (63), welche vorzugsweise als Feingussteil hergestellt sind, jeweils ungefähr die Gestalt einer halbzylindrischen Schale haben, an deren oberer Aussenkante der vorspringende Sperranker (62) angeformt ist und an deren unterer Aussenkante ein Drehlager (64) vorgesehen ist, um welches das Zangenglied von einer äusseren Stellung, in der sein äusserer Teilzylindermantel an der inneren Oberfläche der Bohrung (60) im Zapfen (18) anliegt, zu einer inneren Stellung, bei der sich die beiden Zangenglieder berühren, schwenkbar ist, so dass sich die Sperranker (62) durch diese Schwenkbewegung nach innen verschieben und die Sperrnocken (43) freigeben.

4. Zentralgurtschloss nach Anspruch 3, dadurch gekennzeichnet, dass die Schwenklager der Zangenglieder (63) durch Lagerstifte gebildet sind, die an entsprechender Stelle quer durch den Zapfen (18) verlaufen und im Innern der Axialbohrung (60) von entsprechenden teilzylindrischen Ausnehmungen der Zangenglieder (63) als Lagerschalen umgriffen werden.

5. Zentralgurtschloss nach Anspruch 3, dadurch gekennzeichnet, dass die Zangenglieder (63) in der Axialbohrung (60) von unten her federbelastet sind, so dass sie in ihre gespreizte Stellung zu schwenken und mit ihren teilzylindrischen Aussenflächen an das Innere der Axialbohrung (60) anzulegen bestrebt sind.

6. Zentralgurtschloss nach Anspruch 5, dadurch gekennzeichnet, dass zur Federbelastung der Zangenglieder (63) eine Schraubendruckfeder (67) vorgesehen ist, die im Boden der Axialbohrung (60) des Zapfens (18) in einer dort angeordneten Axialbohrung (68) von entsprechend geringerem Durchmesser gelagert ist und nach oben hin in den Bewegungsbereich der Zangenglieder (63) hineinragt.

7. Zentralgurtschloss nach Anspruch 6, dadurch gekennzeichnet, dass der Boden der Axialbohrung (60) des Zapfens (18) als Gewindebolzen (16) ausgebildet ist, in dessen Längsmitte sich die Axialbohrung (68) zur Aufnahme der Feder (67) befindet, und dass der Zapfen (18) unten eine entsprechende Gewindebohrung für den Gewindebolzen (16) hat, der unterhalb des Zapfens (18) mit einem Radialflansch (15) zur Befestigung des Zapfens im Schlossgehäuse (13) versehen ist.

8. Zentralgurtschloss nach Anspruch 3, dadurch gekennzeichnet, dass die Zangenglieder (63) eine sich parallel zu ihrer aufrechten Symmetrieebene nach oben hin verjüngende Gestalt aufweisen, wobei sie unten im Bereich ihrer Schwenklager (64) so breit sind, dass sie in der Mitte der Axialbohrung (60) einander berühren und dort mit balligen Oberflächen (66) beim Verschwenken aneinander abwälzen.

9. Zentralgurtschloss nach Anspruch 5, 6 und 8, dadurch gekennzeichnet, dass die Schraubendruckfeder (67) vom Boden der Axialbohrung (60) her in eine entsprechend umgekehrte Axialbohrung (69) der zusammengefassten Zangenglieder (63) eingelagert ist, so dass jedes Zangenglied eine halbe untere Axialbohrung für die Feder hat.

10. Zentralgurtschloss nach Anspruch 2 und 3, dadurch gekennzeichnet, dass das von oben, von der linear verschieblichen Fingerbetätigungsvorrichtung (70) her unter Zwischenschaltung einer Druckfeder (78) in den Innenraum zwischen den Zangengliedern (63) hineinragende Übertragungsglied (71) am unteren Ende mit einer Betätigungsfläche (72) versehen ist, die in der gespreizten Stellung der Zangenglieder (63) bei eingedrückter Vorrichtung (70) eine Kraft auf je einen entsprechenden Innenvorsprung (73) der Zangenglieder (63) ausübt und diese dadurch gegen den Druck der unteren Feder (67) nach innen schwenkt und der Innenraum wenigstens der Grösse des Übertragungsgliedes (71) entspricht.

11. Zentralgurtschloss nach Anspruch 10, dadurch gekennzeichnet, dass das Übertragungsglied (71) nahe seinem unteren Ende mit den Zangengliedern (63) zugeordneten Sperrvorsprüngen, vorzugsweise in Form eines das Übertragungsglied beiderseits überragenden Querstiftes (74), versehen ist und dass die Zangenglieder (63) im Bereich der Auf- und Abbewegungen dieser Sperrvorsprünge (74) mit Ausschnitten (76, 77) versehen ist, die einerseits mit den Sperrvorsprüngen im Sinne einer Verriegelung der gespreizten Stellung der Zangenglieder (63) und andererseits im Sinne einer Freigabe der einwärts gerichteten Schwenkbewegungsmöglichkeit der Zangenglieder in Bewegungsrichtung des Übertragungsgliedes (71) übereinander ausgebildet und angeordnet sind.

12. Zentralgurtschloss nach Anspruch 1-11, dadurch gekennzeichnet, dass der gehäusefeste Zapfen (18) auf der Ringfläche, die die Bohrung (60) zur Aufnahme der Zangenglieder (63) umrundet, zwei radial fluchtend verlaufende Erhöhungen oder Nocken (41) als Führungsglieder zur Steuerung der Bewegungen der kippbeweglichen Scheibe (28) über das Kurvenglied (33) angeordnet sind, die an ihren Oberseiten gewölbte Gleitflächen zur Berührung der Kurven des im wesentlichen in der Ebene der Sperranker (62) der Zangenglieder (63) und über den Führungsgliedern (41) angeordneten, mit der kippbeweglichen Scheibe (28) fest verbundenen Kurvengliedes (33) aufweisen.

13. Zentralgurtschloss nach Anspruch 12, dadurch gekennzeichnet, dass die Erhöhungen (41) auf der Ringfläche, nämlich die Führungsglieder zur Steuerung der Scheibe (28), als Rollen ausgebildet sind.

14. Zentralgurtschloss nach Anspruch 1, mit einem Schlossgehäuse mit schlitzförmigen Ausnehmungen und mit mehreren in der Projektion der Ausnehmungen angeordneten, mittels eines Führungskreuzes verbundenen und gehaltenen sowie senkrecht zur Grundplatte des Schlossgehäuses gegen Federwirkung verschieblichen und bei wenigstens einer das Einschieben der Anschlussstücke der Gurte zulassenden Stellung der Drehbetätigungsvorrichtung aus den schlitzförmigen Ausnehmungen entfernbaren Ankerbolzen, ferner mit einem orthogonal zur Grundplatte des Schlossgehäuses verschieblichen Hauptzapfen, der das Führungskreuz beaufschlagt und in dessen Bereich mit einem Sicherungsglied versehen ist, welches die Beweglichkeit des Führungskreuzes und damit der Ankerbolzen in den verschiedenen Funktionsstellungen des Schlosses steuert, wobei die Drehbetätigungsvorrichtung, insbesondere Drehscheibe, an der Oberseite des Hauptzapfens befestigt und mit diesem in beiden Richtungen drehbar sowie mit ihm in das Gehäuse hineindrückbar ist, dadurch gekennzeichnet, dass axial in Hauptzapfen (18) als Übertragungsglied für die Bewegungen der durch Fingerdruck zu betätigenden linear verschieblichen Vorrichtung (104) auf die Verriegelung bzw. das Sicherungsglied (115) ein Drehstift (114) drehbeweglich gelagert ist, dessen oberes Ende über eine entsprechende Kupplung (113) mit der linear verschieblichen Vorrichtung (104) zur Umsetzung der Längsbewegungen der Vorrichtung (104) in Drehbewegungen des Drehstiftes (114) verbunden ist und dessen unteres Ende das Sicherungsglied (115) trägt und entsprechend gegenüber dem Führungskreuz (95) mit den Ankerbolzen (94) verdreht.

15. Zentralgurtschloss nach Anspruch 14, dadurch gekennzeichnet, dass die Kupplung zwischen linear verschieblicher Betätigungsvorrichtung (104) einerseits und Drehstift (114) andererseits als Zahnstangen-Ritzel-Kupplung ausgebildet ist, indem die linear verschiebliche Betätigungsvorrichtung (104) einen als Zahnstange (112) gestalteten Abschnitt aufweist und der Drehstift (114) oben mit einem Ritzel (113) versehen ist, welches mit der Zahnstange kämmt, wobei die linear verschiebliche Betätigungsvorrichtung (104) entgegen ihrer Eindrückrichtung von einer Rückstellfeder (110) beaufschlagt ist.

16. Zentralgurtschloss nach Anspruch 15, dadurch gekennzeichnet, dass die linear verschiebliche Betätigungsvorrichtung (104) als flacher lang-rechteckiger Block, der längsverschieblich in einer entsprechend grossen, flachen, taschenartigen Schiene geführt ist, ausgebildet ist und einen Längsschlitz (111) hat, dessen eine Längskante als Zahnstange (112) gearbeitet und in dessen Lichtraum das Ritzel (113) angeordnet ist.

17. Zentralgurtschloss nach Anspruch 16, dadurch gekennzeichnet, dass die flache taschenartige Führungsschiene (106) für die Betätigungsvorrichtung (104) an der Oberseite der Drehbetätigungsvorrichtung (30) befestigt ist.

18. Zentralgurtschloss nach Anspruch 14-17, dadurch gekennzeichnet, dass das Sicherungsglied (115) am unteren Ende des Drehstiftes (114) als T-förmiger Riegel ausgebildet ist, der das Führungskreuz (95) in der Mitte durchsetzt, wozu das Führungskreuz (95) dort mit einem Langloch (120) versehen ist, dessen Länge der Spannweite des T-förmigen Sicherungsgliedes (115) entspricht, so dass bei fluchtender Stellung der beiden Teile das Führungskreuz (95) mit den Ankerbolzen (94) in axialer Richtung des Hauptzapfens (18) über das Sicherungsglied (115) hinwegbeweglich ist.

19. Zentralgurtschloss nach Anspruch 18, dadurch gekennzeichnet, dass das Langloch (120) im Führungskreuz (95) gegenüber dem T-förmigen Sicherungsglied (115) soviel Spiel aufweist, dass das Führungskreuz (95) in eine zum Einschieben eines Gurt-Anschlussstückes und dabei Niederdrücken des betreffenden Ankerbolzens (94) geeignete Schräglage im Schlossgehäuse (90) kippbeweglich ist.

20. Zentralgurtschloss nach einem der Ansprüche 2-13, dadurch gekennzeichnet, dass an der Drehscheibe (30) über den für die Einzelauslösung vorgesehenen Anschlussstücken (37) eine Griffmulde (130) ausgebildet ist.

## Claims

1. Central belt lock for safety belts, particularly for aviators or parachutists, for the rapid and simultaneously releasable connection of several belts which are provided with connection members and which come together at a central point, the lock comprising means for securely holding said connection members and for releasing them, said means being operatively coupled with a manually operable rotary actuating member, preferably a rotary disc or rotary cross, which is disposed over a central stud in conjunction with which the various movements in the lock occur, characterised in that the rotary actuating member (30) has a separate finger key (70, 104) which is linearly displaceable independently of the actuation of the rotary actuating member (30), which when displaced by means of at least one transmitting member (71, 114) releases the locking (62, 115) of the means (28, 94) which secure the connection members against accidental release, the linearly displaceable finger key (70, 104) being spring-loaded counter to its intended push direction and on returning to its original position it moves the locking means (62, 115) back into the locking position.

2. Central belt lock according to claim 1, having a lock housing with a hook-shaped peripheral bead and with a disc which is disposed opposite said bead, is displaceable against spring force by means of a collar on a stud secured to the housing, at right angles to the base plate of the lock housing and is tiltable in at least that position of the rotary actuating member which permits insertion of the connection members, the lower end of the collar having at least in part a radial flange the outer edge of which extends to below the engaged connection members of the belts, the rotary actuating member being connected to a cam member which controls the movements of the tiltable disc by means of guide members provided on the stud which is secured to the housing, said guide members sliding or rolling along the cam surfaces when the rotary actuating member is moved, the study secured to the housing having, on its upper surface, a part which is provided, above the guide members, with a locking member in the form of a two-winged locking anchor for the tiltable disc in the secured position of the lock, characterised in that the stud (18) has an upwardly open axial bore (60) in which is mounted a component (61) which is movable in the manner of a gripper, the gripper members (63) of which form the wings of the locking anchor (62) which are mounted over locking cams (43) in the functional position, said locking cams (43) being disposed on the inner periphery of the annular cam member (33), the gripper members (63) being acted up to move by the transmitting member (71) to the linearly displaceable device (70) in the form of a finger key, said device (70) being arranged in the centre of the rotary actuating member (30).

3. Central belt lock according to claim 2, characterised in that the gripper members (63) which are arranged in pivotable and mirror-symmetrical manner in the axial bore (60) of the stud (18) and which are preferably constructed as a high quality casting, are each approximately in the form of a semi-cylindrical shell on the upper outer edge of which is formed the projecting locker anchor (62) whilst on the lower outer edge thereof is provided a pivot bearing (64) about which the gripper member is pivotable from an outer position in which its outer part cylindrical surface abuts on the inner surface of the bore (60) in the stud (18) to an inner position in which the two gripper members are in contact with each other, so that the locking anchors (62) are shifted inwardly by this pivoting movement and release the locking cans (43).

4. Central belt lock according to Claim 3, characterised in that the pivot bearing of the gripper members (63) are formed by bearing pins which extend transversally through the stud (18) at a suitable point and are embraced inside the axial bore (60), by corresponding, part cylindrical recesses in the gripper members (63) as bearing sections.

5. Central belt lock according to Claim 3, characterised in that the gripper members (63) are spring loaded from below in the axial bore (60) so that they tend to pivot into their spread position and with their part cylindrical outer surfaces on the inner wall of the axial bore (60).

6. Central belt lock according to Claim 5, characterised in that, in order to spring load the gripper members (63), a helical compression spring (67) is provided which is mounted in the base of the axial bore (60) of the stud (18) in an axial bore (68) provided therein of correspondingly reduced diameter and projects upwardly into the area of movement of the gripper members (63).

7. A central belt lock according to Claim 6, characterised in that the base of the axial bore (60) of the stud (18) is in the form of a threaded bolt (16) along the centre of which is provided the axial bore (68) for receiving the spring (67), and in that the stud (18) has at the bottom a corresponding threaded bore for the threaded bolt (16), which is provided, below the stud (18), with a radial flange (15) for securing the stud in the lock housing (13).

8. Central belt lock according to Claim 3, characterised in that the gripper members (63) taper upwardly parallel to their vertical plane of symetry, whilst at the bottom, in the region of their pivot bearings (64), they are broad enough to make contact with each other in the centre of the axial bore (60) and roll over each other with convex surfaces (66) during pivoting.

9. Central belt lock according to claims 5, 6 and 8, characterised in that the helical compression spring (67) is mounted, from the bottom of the axial bore (60), in a corresponding inverted axial bore (69) in the assembled gripper members (63), so that each gripper member is provided with half of a lower axial bore for the spring.

10. Central belt lock according to claims 2 and 3, characterised in that the transmitting member (71) which projects from above, from the linearly displaceable finger actuating member (70), via an interposed compression spring (78), into the inner space between the gripper members (63), is provided at its lower end with an actuating surface (72) which, in the spread-open position of the gripper members (63), when the member (17) is pressed in, exerts a force on each corresponding inward projection (73) of the gripper members (63) and in this way pivots them inwardly counter to the pressure of the bottom spring (67) and the inner space is at least the size of the transmitting member (71).

11. Central belt lock according to claim 10, characterised in that the transmitting member (71) is provided, near its lower end, with locking projections, preferably in the form of a cross pin projecting beyond the transmitting member on both sides, said lockig projections being associated with the gripping members (63), and in that, in the region of the up and down movements of these locking projections (74), the gripper members (63) are provided with cut-outs (76, 77) which are disposed above one another to cooperate on the one hand with the locking projections in order to arrest the gripper members (63) in their spread-apart position and on the other hand to release the transmitting member (71) for inwardly directed pivoting movement.

12. Central belt lock according to claims 1 to 11, characterised in that the stud (18) secured to the housing comprises, on the annular surface which surrounds the bore (60) for receiving the gripper members (63), two radially extending and aligned raised portions or cams (41) serving as guide members for controlling the movements of the tiltable disc (28) via the cam member (33), the raised portions having on their upper surfaces convex slide surfaces for contacting the cams of the cam member (33), which is rigidly connected to the tiltable disc (28) and which is disposed essentially in the plane of the locking anchors (62) of the gripper members (63), and over the guide members (41).

13. Central belt lock according to claim 12, characterised in that the raised portions (41) on the annular surface, namely the guide means for controlling the disc (28), are in the form of rollers.

14. Central belt lock according to claim 1, having a belt housing with slot-shaped recesses and with a plurality of anchor bolts which are disposed in the projections of recesses, are connected and held by a guide cross and are displaceable against spring force, at right angle to the base plate of the lock housing, and can be withdrawn from the slot-like recesses in at least that position of the rotary actuating member which permits insertion of the connection members of the belts, and further having a main stud which is displaceable at right angles to the base plate of the lock housing and which acts on the guide cross and is provided with a securing member in the vicinity of the guide cross, this securing member controlling the mobility of the guide cross and hence of the anchor bolts in the various functional positions of the lock, whilst the rotary actuating member, more particularly a rotary disc, is secured to the top of the main stud and is rotable therewith in both directions and can be withdrawn into the housing therewith, characterised in that rotary pin (114) is rotably and axially mounted in the main stud (18) to form the transmitting member for transmitting the movements of the linearly displaceable member (104) operated by finger pressure to the locking or securing member (115), the upper end of said rotary pin (114) being connected to the linearly displaceable device (104) via a suitable coupling (113) in order to convert the longitudinal movements of the device (104) into rotary movements of the rotary pin (114) whilst the lower end thereof carries the securing member (115) and accordingly rotates relative to the guide cross (95) with the anchor bolts (94).

15. Central belt lock according to claim 14, characterised in that the coupling between the linearly displaceable actuating device (104) on the one hand and the rotary pin (114) on the other hand is constructed as a rack and pinion coupling, the linearly displaceable actuating device (104) having a portion in the form of a rack (112) whilst the rotary pin (114) is provided at the top with a pinion (113) which meshes with the rack, the linearly displaceable actuating device (104) being acted upon by a return spring (110) counter to the direction of insertion.

16. Central belt lock according to claim 15, characterised in that the linearly displaceable actuating device (104) is constructed as a flat, rectangular block which is longitudinally displaceably guided in a correspondingly sized, flat, pocket-like track and has a longitudinal slot (111), one long edge of which is in the form of a toothed rack (112), the pinion (113) being disposed in the open space of said slot.

17. Central belt lock according to claim 16, characterised in that the shallow, pocket-like guide track (106) for the actuating device (104) is provided on the upper side of the rotary actuating device (30).

18. Central belt lock according to claims 14 to 17, characterised in that the securing member (115) is formed on the lower end of rotary pin (114) as a T-shaped locking bar which passes through the centre of the guide cross (95), the guide cross (95) being provided with an oblong hole (120) in that position for this purpose, the length of the hole corresponding to the span of the T-shaped securing member (115), so that when the two parts are aligned, the guide cross (95) with the anchor bolts (94) can move past the securing member (115) in the axial direction of the main stud (18).

19. Central belt lock according to claim 18, characterised in that the oblong hole (120) in the guide cross (95) is provided with enough play relative to the T-shaped securing member (115) to permit the guide cross (95) to be tilted into an inclined position in the lock housing (90) suitable for the insertion of a belt connection member and hence for depression of the associated anchor bolt (94).

20. Central belt lock according to one of claims 2 to 13, characterised in that a grip depression (130) is formed on the rotary disc (30) above the connection members (37) intended for individual actuation.

**Revendications**

1. Boucle de fermeture centrale pour ceintures de sécurité, notamment d'aviateurs ou de parachutistes, pour l'assemblage – défaisable rapidement et simultanément – de plusieurs ceintures munies d'éléments de raccordement et concourrant en un point central, laquelle boucle comporte des dispositifs pour maintenir bloqués ainsi que pour libérer les éléments de raccordement, ces dispositifs étant accouplés fonctionnellement à un dispositif d'actionnement rotatif – de préférence un disque rotatif ou un croisillon rotatif – actionnable manuellement qui est disposé au-dessus d'un pivot médian sur lequel sont orientés les différents mouvements dans la boucle de fermeture, caractérisée en ce que le dispositif d'actionnement rotatif (30) présente un poussoir manuel indépendant (70, 104) qui est déplaçable linéairement indépendamment de l'actionnement du dispositif d'actionnement rotatif (30), et qui lors de son déplacement libère, par l'intermédiaire d'au moins un élément de transmission (71, 114), le moyen de verrouillage (62, 115) des dispositifs (28, 94) qui empêchent toute libération non intentionnelle des éléments de raccordement, le poussoir manuel déplaçable linéairement (70, 104) étant contraint élastiquement à l'encontre du sens d'enfoncement prévu, et, lors de son retour à sa position initiale, déplaçant à nouveau le moyen de verrouillage (62, 115) à sa position de verrouillage.

2. Boucle de fermeture centrale selon la revendication 1, avec un boîtier de boucle avec un rebord renflé en forme de crochet et avec un disque disposé en vis-à-vis du rebord renflé, disque qui, au moyen d'un moyeu monté sur un pivot solidaire du boîtier, peut être déplacé perpendiculairement au socle du boîtier de boucle, à l'encontre d'une force de ressort, et qui est mobile, en basculement, à au moins une position – autorisant l'insertion des éléments de raccordement – du dispositif d'actionnement rotatif, le moyeu présentant, à son extrémité inférieure, une bride au moins partiellement radiale, dont le bord extérieur s'étend jusqu'en dessous des éléments de raccordement enclenchés des ceintures, et le dispositif d'actionnement rotatif étant relié à un élément à cames qui commande les mouvements du disque mobile en basculement au moyen d'éléments de guidage montés sur le pivot solidaire du boîtier, lesquels glissent sur les cames ou selon le cas roulent lorsque le dispositif d'actionnement rotatif est manœuvré, et le pivot solidaire du boîtier portant, sur le dessus, un élément rapporté qui est muni, au-dessus des éléments de guidage, d'un moyen de verrouillage sous la forme d'un élément de blocage à deux branches destiné à bloquer le disque mobile en basculement à la position verrouillée de la boucle de fermeture, caractérisée en ce que le pivot (18) présente un alésage axial ouvert vers le haut (60) dans lequel est disposé un élément (61) mobile à la manière d'une pince dont les branches (63) constituent les branches de l'élément de blocage (62), lesquelles à la position de fonctionnement s'appuient sur des ergots de blocage (43) qui se trouvent sur la périphérie intérieure de l'élément à cames de forme annulaire (33), les branches de pince (63) étant sollicitées, dans leur déplacement, par l'élément de transmission (71) du dispositif déplaçable linéairement (70) configuré en touche à main, qui est disposé au milieu du dispositif d'actionnement rotatif (30).

3. Boucle de fermeture centrale selon la revendication 2, caractérisée en ce que les branches de pince (63) disposées symétriquement dans l'alésage axial (60) du pivot (18) et mobiles en pivotement, qui sont de préférences des pièces coulées de précision, présentent, chacune approximativement, la forme d'une coque semi-cylindrique sur le bord extérieur supérieur de laquelle est formé l'élément de blocage (62) en saillie et sur le bord extérieur inférieur de laquelle est prévu un palier rotatif (64) autour duquel la branche de pince peut pivoter d'une position extérieure – à laquelle sa surface extérieure partiellement cylindrique s'appuie contre la surface intérieure de l'alésage (60) pratiqué dans le pivot (18) – à une position intérieure – à laquelle les deux branches de pince se touchent, – de sorte que, suite à ce mouvement de pivotement, les éléments de blocage (62) se déplacent vers l'intérieur et libèrent les ergots de blocage (43).

4. Boucle de fermeture centrale selon la revendication 3, caractérisée en ce que les paliers de pivotement des branches de pince (63) sont constitués par des axes de palier qui s'étendent en des endroits correspondants, perpendiculairement à travers le pivot (18), et qui sont entourés, à l'intérieur de l'alésage axial (60), par des évidements partiellement cylindriques correspondants des branches de pince (63), qui constituent les coussinets de palier.

5. Boucle de fermeture centrale selon la revendication 3, caractérisée en ce que les branches de pince (63) sont contraintes élastiquement par le bas dans l'alésage axial (60), de sorte qu'elles sont contraintes à pivoter à leur position écartée et à s'appliquer par leurs faces extérieures partiellement cylindriques contre l'intérieur de l'alésage axial (60).

6. Boucle de fermeture centrale selon la revendication 5, caractérisée en ce qu'il est prévu, pour la contrainte élastique des branches de pince (63), un ressort de compression hélicoïdal (67) qui est monté dans le fond de l'alésage axial (60) du pivot (18), dans un alésage axial (68) de diamètre réduit correspondant qui y est pratiqué, et qui s'étend vers le haut jusque dans la zone de déplacement des branches de pince (63).

7. Boucle de fermeture centrale selon la revendication 6, caractérisée en ce que le fond de l'alésage axial (60) du pivot (18) est configué en goujon fileté dans le milieu longitudinal duquel se trouve l'alésage axial (68) destiné à recevoir le ressort (67), et en ce que le pivot (18) présente, sur le dessous, un alésage fileté adéquat pour le goujon fileté (16), lequel est muni, en dessous du pivot (18), d'une bride radiale (15) pour la fixation du pivot dans le boîtier de boucle (13).

8. Boucle de fermeture centrale selon la revendication 3, caractérisée en ce que les branches de pince (63) présentent une forme allant en se rétrécissant vers le haut, parallèlement à leur plan de symétrie vertical, lesdites branches étant, vers le bas, dans la région de leur palier de pivotement (64), suffisamment larges pour entrer en contact mutuel au milieu de l'alésage axial (60) et rouler dans cette région l'une contre l'autre par des surfaces convexes (66) lors du pivotement.

9. Boucle de fermeture centrale selon l'une des revendications 5, 6 et 8, caractérisée en ce que le ressort de compression hélicoïdal (67) est inséré par le fond de l'alésage axial (60), dans un alésage axial réciproque correspondant (69) des branches de pince (63) réunies, de sorte que chaque branche de pince dispose d'un demi-alésage axial inférieur pour le ressort.

10. Boucle de fermeture centrale selon la revendication 2 ou 3, caractérisée en ce que l'élément de transmission (71), dont l'extrémité supérieure part du dispositif d'actionnement manuel (70) déplaçable linéairement et qui s'étend vers le bas, dans l'espace intérieur présent entre les branches de pince (63), avec intercalage d'un ressort de compression (78), est muni, à son extrémité inférieure, d'une face d'actionnement (72) qui, à la position écartée des branches de pince (63), lorsque le dispositif (70) est enfoncé, exerce une force sur des épaulements intérieurs correspondants respectifs (73) des branches de pince (63), faisant ainsi pivoter ces dernières vers l'intérieur, à l'encontre de la pression du ressort inférieur (67), ledit espace intérieur correspondant au moins à la taille de l'élément de transmission (71).

11. Boucle de fermeture centrale selon la revendication 10, caractérisée en ce que l'élément de transmission (71) est muni, à proximité de son extrémité inférieur d'épaulements de blocage associés aux branches de pince (63), de préférence sous la forme d'un axe transversal (74) dépassant des deux côtés de l'élément de transmission, et en ce que les branches de pince (63) sont munies, dans la région des déplacements, vers le haut et vers le bas de ces épaulements de blocage (74), de découpures (76, 77) qui sont disposées et configurées l'une au-dessus de l'autre afin de coopérer avec les épaulements de blocage, d'une part, en vue de verrouiller la position écartée des branches de pince (63) et, d'autre part, en vue d'autoriser la possibilité de pivotement vers l'intérieur des branches de pince, selon le sens de déplacement de l'élément de transmission (71).

12. Boucle de fermeture centrale selon l'une des revendications 1 à 11, caractérisée en ce que le pivot (18) solidaire du boîtier présente, sur sa face annulaire qui entoure l'alésage (60) destiné à recevoir les branches de pince (63), deux bossages ou ergots (41) s'étendant en alignement radial comme éléments de guidage pour commander les mouvements du disque mobile en basculement (28) par l'intermédiaire de l'élément à cames (33), bossages qui présentent, sur leurs côtés supérieurs, des faces de glissement bombées destinées à entrer en contact avec les cames de l'élément à cames (33) qui est disposé, pour l'essentiel, dans le plan des éléments de blocage (62) des branches de pince (63) et au-dessus des éléments de guidage (41), et qui est assemblé fixement au disque mobile en basculement (28).

13. Boucle de fermeture centrale selon la revendication 12, caractérisée en ce que les bossages (41) présents sur la face annulaire, à savoir les éléments de guidage pour la commande du disque (28), sont réalisés en forme de rouleaux.

14. Boucle de fermeture centrale selon la revendication 1, avec un boîtier de boucle avec des évidements en forme de fentes et avec plusieurs tirants d'ancrage disposés dans la projection des évidements, maintenus et assemblés au moyen d'un croisillon de guidage, déplaçables perpendiculairement au socle du boîtier de boucle, à l'encontre d'une force de ressort et, à au moins une position du dispositif d'actionnement rotatif autorisant l'insertion des éléments de raccordement des boucles, enlevables des évidements en forme de fentes, ainsi qu'avec un pivot principal déplaçable orthogonalement au socle du boîtier de boucle, pivot qui sollicite le croisillon de guidage et qui est muni, dans sa région, d'un élément de blocage qui commande la mobilité du croisillon de guidage et, par suite, des tirants d'ancrage aux différentes positions fonctionnelles de la boucle de fermeture, le dispositif d'actionnement rotatif, à savoir notamment un disque rotatif, étant fixé sur le dessus du pivot principal et étant rotatif avec ce dernier dans les deux sens de rotation ainsi qu'enfonçable avec ce dernier dans le boîtier, caractérisée en ce qu'une tige rotative (114) est montée, mobile en rotation, axialement dans le pivot principal (18) comme élément de transmission au moyen de verrouillage ou encore à l'élément de blocage (105) des mouvements du dispositif (104) déplaçable linéairement par enfoncement manuel, tige dont l'extrémité supérieure est reliée au dispositif (104) déplaçable linéairement par l'intermédiaire d'un accouplement correspondant (113), afin de transformer les déplacements longitudinaux du dispositif (104) en mouvements rotatifs de la tige rotative (104), et dont l'extrémité inférieure porte l'élément de blocage (115) et tourne en conséquence par rapport au croisillon de guidage (95) avec les tirants d'ancrage (94).

15. Boucle de fermeture centrale selon la revendication 14, caractérisée en ce que l'accouplement entre, d'une part, le positif d'actionnment deplaçable linéairement (104) et, d'autre part, la tige rotative (114) est réalisé selon le principe crémaillère-pignon, en ce que le dispositif d'actionnement déplaçable linéairement (104) présente une partie configurée en crémaillère (112) et que la tige rotative (114) est munie sur le dessus d'un pignon (113) qui s'engrène avec la crémaillère, le dispositif d'actionnement déplaçable linéairement (104) étant sollicité à l'encontre de son sens d'enfoncement par un ressort de rappel (110).

16. Boucle de fermeture centrale selon la revendication 15, caractérisée en ce que le dispositif d'actionnement déplaçable linéairement (104) est réalisé sous la forme d'un bloc rectangulaire plat et oblong – qui est guidé en déplacement longitudinal dans une glissière plate du genre poche de taille correspondante, – et possède une fente longitudinale (111) dont un des bords longitudinaux est façonné en crémaillère (112) et dans l'espace libre de laquelle est disposé le pignon (113).

17. Boucle de fermeture centrale selon la revendication 16, caractérisée en ce que la glissière de guidage en forme de poche plate (106) destinée au dispositif d'actionnement (104) est fixée sur le dessus du dispositif d'actionnement rotatif (30).

18. Boucle de fermeture centrale selon l'une des revendications 14 à 17, caractérisée en ce que l'élément de blocage (115) est réalisé à l'extrémité inférieure de la tige rotative (114) sous la forme d'un pêne en T qui traverse le croisillon de guidage (95) en son milieu, le croisillon de guidage (95) étant muni, à cet effet, à cet endroit, d'un orifice oblong (120) dont la longueur correspond à la portée de l'élément de blocage en T (115), de sorte que lorsque les deux pièces sont en alignement, le croisillon de guidage (95) avec les tirants d'ancrage (94) peut être déplacé dans le sens axial du pivot principal (18) au-delà de l'élément de blocage (115).

19. Boucle de fermeture centrale selon la revendication 18, caractérisée en ce que l'orifice oblong (120) pratiqué dans le croisillon de guidage (95) présente par rapport à l'élément de blocage en T (115) suffisamment de jeu pour que le croisillon de guidage (95) soit déplaçable, en basculement, dans le boîtier de boucle (90), à une position oblique permettant l'insertion d'un élément de raccordement de ceinture, en enfonçant, ce faisant, le tirant d'ancrage (94) correspondant.

20. Boucle de fermeture centrale selon l'une des revendications 2 à 13, caractérisée en ce qu'une cuvette de préhension (130) est configurée sur le disque rotatif (30), au-dessus des éléments de raccordement (37) prévus pour le désenclenchement individuel.

_Fig. 1_

_Fig. 2_

*Fig. 3*

Fig. 4

*Fig.5*

_Fig.6_

_Fig. 7_

_Fig. 8_

_Fig.9_

_Fig.10_

Fig.11

Fig.12

Fig. 13

Fig. 14